# EUROPEAN PATENT SPECIFICATION

(11) **EP 4 319 208 B1**
(45) Date of publication and mention of the grant of the patent: **17.06.2026**
(21) Application number: 22794648.0
(22) Date of filing: 18.04.2022
(51) Int. Cl.: H04W 4/06, H04W 80/04, H04W 76/40, H04W 76/15, H04W 76/12, H04W 76/11

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 30.04.2021 CN 202110484680
(43) Date of publication of application: 07.02.2024
(73) Proprietor: Huawei Technologies Co., Ltd., Shenzhen, Guangdong 518129 (CN)
(72) Inventor: WANG, Yan, Shenzhen, Guangdong 518129 (CN); LI, Bingzhao, Shenzhen, Guangdong 518129 (CN); CAO, Zhenzhen, Shenzhen, Guangdong 518129 (CN); LI, Meng, Shenzhen, Guangdong 518129 (CN)
(74) Representative: Grünecker Patent- und Rechtsanwälte PartG mbB
(86) International application number: PCT/CN2022/087367
(87) International publication number: WO 2022/228177

(56) References cited:
- WO-A1-2020/001317
- WO-A1-2021/051320
- WO-A1-2021/051320
- CN-A- 112 511 989
- US-A1- 2021 105 787
- NOKIA, NOKIA SHANGHAI BELL: "Miscellaneous Aspects of MBS Provisioning", 3GPP DRAFT; R2-2102946, 3RD GENERATION PARTNERSHIP PROJECT (3GPP), SOPHIA-ANTIPOLIS CEDEX ; FRANCE, 2 April 2021 (2021-04-02), Electronic; 20210412 - 20210420, XP051992433

## Description

### TECHNICAL FIELD

This application relates to the field of communication technologies, and in particular, to a communication method and an apparatus.

### BACKGROUND

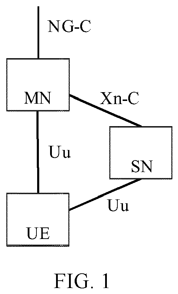

Current network systems support a dual connectivity technology. FIG. 1 is a schematic diagram of a control plane architecture of a dual connection. As shown in FIG. 1, two radio access network nodes separately provide services for user equipment (user equipment, UE) through an air interface such as a Uu interface, where one radio access network node is a master radio access network node (master radio access network node), which is referred to as a master node (master node, MN) for short, and the other radio access network node is a secondary radio access network node (secondary radio access network node), which is referred to as a secondary node (secondary node, SN) for short. The master node and a core network (core network, CN) establish an NG control plane protocol, such as an NG application protocol (NG application protocol, NGAP), association to the UE, and the MN is connected to the SN through an Xn interface control plane (Xn-control, Xn-C).

By using a multicast broadcast service (multicast/broadcast service, MBS) technology, data transmission efficiency on an air interface and a backhaul (backhaul) interface can be greatly improved. However, currently, there is no related technology that can resolve a problem that the SN provides MBS data for the UE in a dual connectivity scenario.

WO 2021/051320 A1 discloses a method and apparatus for service data transmission, as well as network and terminal devices, where a first cell receives an indication that a terminal needs to receive Multimedia Broadcast Multicast Service (MBMS); the first cell determines that a second cell supports MBMS transmission and then provides MBMS to the terminal via the second cell.

### SUMMARY

This application provides a communication method and an apparatus, so that an SN provides MBS data for a terminal device in a dual connectivity scenario, to improve data transmission flexibility. The invention is defined according to the independent claims. The dependent claims recite advantageous embodiments.

According to a first aspect, a communication method is provided, where the method includes: A master radio access network node sends a first request to a secondary radio access network node, where the first request requests the secondary radio access network node to provide a multicast broadcast service for a terminal device, and the first request includes a first identifier corresponding to the multicast broadcast service; and the master radio access network node receives a first response from the secondary radio access network node, where the first response indicates that the secondary radio access network node accepts to provide the multicast broadcast service for the terminal device. In this aspect, the terminal device is dual-connected to the MN and the SN. The MN requests the SN to provide the MBS service for the terminal device of the MN, and the SN responds to the MN by accepting to provide the MBS service for the terminal device. Therefore, MBS service data is sent to the UE through the SN in a dual connectivity scenario.

With reference to the first aspect, in a possible implementation, the first response includes first interface address information between the secondary radio access network node and a core network, or second interface address information between the secondary radio access network node and the master radio access network node. In this implementation, the first interface address information is interface address information allocated by the SN for the MBS service. The first interface address information may also be referred to as NG-U interface tunnel address information of a secondary base station, that is, the SN performs data transmission with the core network through an NG-U interface. The second interface address information is interface address information allocated by the SN for the MBS service. The second interface address information may also be referred to as Xn-U interface tunnel address information of the secondary base station, that is, the SN performs data transmission with the MN through an Xn-U interface. The MN receives the first interface address information or the second interface address information provided by the SN, and sends the first interface address information or the second interface address information to the core network, so that the core network may send the MBS service data to the SN based on the first interface address information or the second interface address information.

With reference to the first aspect, in a possible implementation, the first response includes MBS air interface configuration information of the secondary radio access network node, and the master wireless communication node sends the MBS air interface configuration information to the terminal device.

With reference to the first aspect or any possible implementation of the first aspect, in another possible implementation, the first response further indicates that the multicast broadcast service already exists on the secondary radio access network node, or a data transmission channel of the multicast broadcast service is already established on the secondary radio access network node. In this implementation, when the MN requests the SN to provide the MBS service for the UE of the MN, and when a shared NG-U tunnel corresponding to the MBS service already exists on the SN, the SN may indicate that the MBS service already exists on the SN, or the data transmission channel of the MBS service is already established on the SN, to prevent repeatedly establishing a tunnel for the MBS service, so that communication overheads are reduced and communication resources are saved.

With reference to the first aspect or any possible implementation of the first aspect, in another possible implementation, the first identifier is at least one piece of the following information: a reference identifier of the multicast broadcast service or a session identifier of the multicast broadcast service.

With reference to the first aspect or any possible implementation of the first aspect, in another possible implementation, the first request further includes at least one piece of the following information: an access point AP identifier of the multicast broadcast service, an access and mobility management function identifier, a session management function identifier, a multicast broadcast-session management function identifier, and a multicast broadcast-function identifier. In this implementation, the MN sends the at least one piece of information to the SN. After obtaining the at least one piece of information, the SN may request the MBS service data from the core network, and does not need to send the request through the MN.

With reference to the first aspect or any possible implementation of the first aspect, in another possible implementation, the first request further includes an Internet Protocol IP multicast group address of the multicast broadcast service, and the IP multicast group address is used to receive data of the multicast broadcast service. In this implementation, when the MN requests the SN to provide the MBS service for the UE of the MN, the MN provides an IP multicast group address. When the SN accepts to provide the MBS service for the UE, the SN joins the IP multicast group address to obtain the MBS service data. The core network needs to send only one copy of the MBS service data to the IP multicast group address, so that communication efficiency is improved and communication overheads are reduced.

With reference to the first aspect or any possible implementation of the first aspect, in another possible implementation, the method further includes: The master radio access network node sends a second request to the core network, where the second request includes the first identifier and at least one of the following: the first interface address information or a second identifier corresponding to the secondary radio access network node. The second identifier is an identifier of the secondary radio access network node, or an identifier of a cell of the secondary radio access node. In this implementation, the MN sends the second request to the core network, to request the core network to send the MBS service data to the first interface address information; or the MN sends the second request to the core network, to notify the core network that the MBS service is provided by the SN indicated by using the second identifier for the UE, so that the core network can perceive the SN and clearly know that the MBS data is sent to the SN.

With reference to the first aspect or any possible implementation of the first aspect, in another possible implementation, the method further includes: The master radio access network node receives a third request from the secondary radio access network node, where the third request includes at least one of the following: the first identifier, the second identifier corresponding to the secondary radio access network node, and the first interface address information between the secondary radio access network node and the core network; the master radio access network node sends a fourth request to the core network, where the fourth request includes at least one of the following: the first identifier, the second identifier, and the first interface address information; the master radio access network node receives a second response from the core network, where the second response includes the first identifier and optionally includes the second identifier; and the master radio access network node sends a third response to the secondary radio access network node, where the third response includes the first identifier and optionally includes the second identifier. In this implementation, the core network may perceive the SN, but interaction between the SN and the core network is performed through the MN.

With reference to the first aspect or any possible implementation of the first aspect, in another possible implementation, the method further includes: The master radio access network node receives data of the multicast broadcast service from the core network; and the master radio access network node forwards the data to the secondary radio access network node based on the second interface address information. In this implementation, a manner of establishing an Xn-U tunnel from the MN to the SN is provided, so that the SN can provide the MBS service for the UE.

According to a second aspect, a communication method is provided, where the method includes: A secondary radio access network node receives a first request from a master radio access network node, where the first request requests the secondary radio access network node to provide a multicast broadcast service for a terminal device, and the first request includes a first identifier corresponding to the multicast broadcast service; and the secondary radio access network node sends a first response to the master radio access network node based on the first request, where the first response indicates that the secondary radio access network node accepts to provide the multicast broadcast service for the terminal device.

With reference to the second aspect, in a possible implementation, the first response includes first interface address information between the secondary radio access network node and a core network, or second interface address information between the secondary radio access network node and the master radio access network node.

With reference to the second aspect or any possible implementation of the second aspect, in another possible implementation, the first response further indicates that the multicast broadcast service already exists or is established on the secondary radio access network node, or a data transmission channel of the broadcast multicast service is already established on the secondary radio access network node.

With reference to the second aspect, in a possible implementation, the first response includes MBS air interface configuration information of the secondary radio access network node.

With reference to the second aspect, in a possible implementation, after receiving the first request, the secondary radio access node sends the MBS air interface configuration information to the terminal device.

With reference to the second aspect or any possible implementation of the second aspect, in another possible implementation, the first identifier is at least one piece of the following information: a reference identifier of the multicast broadcast service or a session identifier of the multicast broadcast service.

With reference to the second aspect or any possible implementation of the second aspect, in another possible implementation, the first request further includes an access point AP identifier of the multicast broadcast service, an access and mobility management function identifier, a session management function identifier, a multicast broadcast-session management function identifier, and a multicast broadcast-function identifier. The method further includes: The secondary radio access network node sends a fifth request to the core network based on the first request, where the fifth request includes the first interface address information; and the secondary radio access network node receives data of the multicast broadcast service from the core network based on the first interface address information.

With reference to the second aspect or any possible implementation of the second aspect, in another possible implementation, the first request includes an Internet Protocol IP multicast group address of the multicast broadcast service. The method further includes: The secondary radio access network node joins an IP multicast group based on the IP multicast group address; and the secondary radio access network node receives the data of the multicast broadcast service from the core network.

With reference to the second aspect or any possible implementation of the second aspect, in another possible implementation, the method includes: The secondary radio access network node receives the data of the multicast broadcast service from the core network based on the first interface address information.

With reference to the second aspect or any possible implementation of the second aspect, in another possible implementation, the method further includes: The secondary radio access network node sends a third request to the master radio access network node, where the third request includes at least one of the following: the first identifier, a second identifier corresponding to the secondary radio access network node, and first interface address information between the secondary radio access network node and the core network; and the secondary radio access network node receives a third response from the master radio access network node, where the third response includes the first identifier and optionally includes the second identifier.

With reference to the second aspect or any possible implementation of the second aspect, in another possible implementation, the method further includes: The secondary radio access network node receives data of the multicast broadcast service from the master radio access network node based on the second interface address information.

According to a third aspect, a communication method is provided. The method includes: A core network receives a second request, where the second request includes a first identifier corresponding to a multicast broadcast service and at least one of the following: first interface address information between a secondary radio access network node and the core network, or a second identifier corresponding to the secondary radio access network node; and the core network sends data of the multicast broadcast service based on the first identifier and at least one of the first interface address information and the second identifier.

According to a fourth aspect, a communication apparatus is provided, and the communication apparatus may implement the communication method in the first aspect. For example, the communication apparatus may be a chip or a radio access network node. The foregoing method may be implemented by using software, hardware, or by executing corresponding software by hardware.

In a possible implementation, the communication apparatus may include a transceiver unit and a processing unit. The transceiver unit is configured to send a first request to a secondary radio access network node, where the first request requests the secondary radio access network node to provide a multicast broadcast service for a terminal device, and the first request includes a first identifier corresponding to the multicast broadcast service; and the transceiver unit is further configured to receive a first response from the secondary radio access network node, where the first response indicates that the secondary radio access network node accepts to provide the multicast broadcast service for the terminal device.

Optionally, the transceiver unit is further configured to send a second request to the core network, where the second request includes the first identifier and at least one of the following: first interface address information or a second identifier corresponding to the secondary radio access network node.

Optionally, the transceiver unit is further configured to receive a third request from the secondary radio access network node, where the third request includes the first identifier and at least one of the following: a second identifier corresponding to the secondary radio access network node and the first interface address information between the secondary radio access network node and the core network; the transceiver unit is further configured to send a fourth request to the core network, where the fourth request includes at least one of the following: the first identifier, the second identifier, and the first interface address information; the transceiver unit is further configured to receive a second response from the core network, where the second response includes the first identifier and optionally includes the second identifier; and the transceiver unit is further configured to send a third response to the secondary radio access network node, where the third response includes the first identifier and optionally includes the second identifier.

Optionally, the transceiver unit is further configured to receive data of the multicast broadcast service from the core network; and the transceiver unit is further configured to forward the data to the secondary radio access network node based on second interface address information.

Optionally, the first response includes MBS air interface configuration information of the secondary radio access network node, and the transceiver unit is further configured to send the MBS air interface configuration information to the terminal device.

According to a fifth aspect, a communication apparatus is provided, and the communication apparatus can implement the communication method in the second aspect. For example, the communication apparatus may be a chip or a radio access network node. The foregoing method may be implemented by using software, hardware, or by executing corresponding software by hardware.

In a possible implementation, the communication apparatus may include a transceiver unit and a processing unit. The transceiver unit is configured to receive a first request from a master radio access network node, where the first request requests a secondary radio access network node to provide a multicast broadcast service for a terminal device, and the first request includes a first identifier corresponding to the multicast broadcast service; and the transceiver unit is further configured to send a first response to the master radio access network node based on the first request, where the first response indicates that the secondary radio access network node accepts to provide the multicast broadcast service for the terminal device.

Optionally, the first identifier is a reference identifier of the multicast broadcast service or a session identifier of the multicast broadcast service.

Optionally, the first request further includes an access point AP identifier, an access and mobility management function identifier, a session management function identifier, a multicast broadcast-session management function identifier, and a multicast broadcast-function identifier of the multicast broadcast service; the transceiver unit is further configured to send a fifth request to a core network based on the first request, where the fifth request includes first interface address information; and the transceiver unit is further configured to receive data of the multicast broadcast service from the core network based on the first interface address information.

Optionally, the first request includes an Internet Protocol IP multicast group address of the multicast broadcast service; the processing unit is configured to join an IP multicast group based on the IP multicast group address; and the transceiver unit is further configured to receive the data of the multicast broadcast service from the core network.

Optionally, the transceiver unit is further configured to receive the data of the multicast broadcast service from the core network based on the first interface address information.

Optionally, the transceiver unit is further configured to send a third request to the master radio access network node, where the third request includes at least one of the following: the first identifier, a second identifier corresponding to the secondary radio access network node, and the first interface address information between the secondary radio access network node and the core network; and the transceiver unit is further configured to receive a third response from the master radio access network node, where the third response includes the first identifier and optionally includes the second identifier.

Optionally, the transceiver unit is further configured to receive the data of the multicast broadcast service from the master radio access network node based on second interface address information.

Optionally, the first response includes MBS air interface configuration information of the secondary radio access network node.

Optionally, the transceiver unit is further configured to send the MBS air interface configuration information to the terminal device.

According to a sixth aspect, a communication apparatus is provided, and the communication apparatus may implement the communication method in the first aspect. For example, the communication apparatus may be a chip or a core network. The foregoing method may be implemented by using software, hardware, or by executing corresponding software by hardware.

In a possible implementation, the communication apparatus may include a transceiver unit and a processing unit. The transceiver unit is configured to receive a second request, where the second request includes: a first identifier corresponding to a multicast broadcast service, and at least one of the following: first interface address information between a secondary radio access network node and a core network, or a second identifier corresponding to the secondary radio access network node; and the transceiver unit is further configured to send data of the multicast broadcast service based on the first identifier and at least one of the first interface address information or the second identifier.

In a possible implementation, the communication apparatus in the fourth aspect to the sixth aspect includes a processor coupled to a memory; and the processor is configured to support the apparatus in performing a corresponding function in the foregoing communication method. The memory may be coupled to the processor, and stores a program (instructions) and/or data necessary for the apparatus. Optionally, the communication apparatus may further include a communication interface, which is configured to support communication between the apparatus and another network element. Optionally, the memory may be located inside the communication apparatus, or may be located outside the communication apparatus.

In another possible implementation, the communication apparatus in the fourth aspect to the sixth aspect includes a processor and a transceiver apparatus, the processor is coupled to the transceiver apparatus, and the processor is configured to execute a computer program or instructions to control the transceiver apparatus to receive and send information; and when the processor executes the computer program or instructions, the processor is further configured to implement the foregoing method by using a logic circuit or by executing code instructions. The transceiver apparatus may be a transceiver, a transceiver circuit, or an input/output interface, and is configured to receive a signal from another communication apparatus than the communication apparatus and transmit the signal to the processor, or send a signal from the processor to another communication apparatus than the communication apparatus. When the communication apparatus is a chip, the transceiver apparatus is the transceiver circuit or the input/output interface.

When the communication apparatus in the fourth aspect to the sixth aspect is the chip, a sending unit may be an output unit, for example, an output circuit or a communication interface; and a receiving unit may be an input unit, for example, an input circuit or the communication interface. When the communication apparatus is a terminal device, the sending unit may be a transmitter or a transmitter machine; and the receiving unit may be a receiver or a receiver machine.

According to a seventh aspect, a computer-readable storage medium is provided, where the computer-readable storage medium stores a computer program or instructions, and when the computer program or the instructions are executed, the methods according to the foregoing aspects are implemented.

According to an eighth aspect, a computer program product including instructions is provided. When the instructions are run on a communication apparatus, the communication apparatus is enabled to perform the methods in the foregoing aspects.

According to a ninth aspect, a communication system is provided. The communication system includes the communication apparatus in the fourth aspect, the communication apparatus in the fifth aspect, and the communication apparatus in the sixth aspect.

### BRIEF DESCRIPTION OF DRAWINGS

FIG. 1 is a schematic diagram of a control plane architecture of a dual connection;
FIG. 2 is a schematic diagram of an architecture of a communication system 1000 to which an embodiment of this application is applied;
FIG. 3 is a schematic diagram of a connection between a radio access network node and a core network;
FIG. 4 is a schematic diagram of an architecture of a dual connection on a UE side;
FIG. 5 is a schematic diagram of an architecture of a dual connection on a radio access network side;
FIG. 6 is a schematic diagram of data transmission;
FIG. 7 is a schematic diagram of multicast;
FIG. 8 is a schematic flowchart of a communication method according to an embodiment of this application;
FIG. 9 is a schematic flowchart of another communication method according to an embodiment of this application;
FIG. 10 is a schematic diagram of establishing an NG-U tunnel between a core network and an SN in a dual connectivity scenario according to an example of this application;
FIG. 11 is a schematic flowchart of another communication method according to an embodiment of this application;
FIG. 12 is a schematic flowchart of another communication method according to an embodiment of this application;
FIG. 13 is a schematic flowchart of another communication method according to an embodiment of this application;
FIG. 14 is a schematic flowchart of another communication method according to an embodiment of this application;
FIG. 15 is a schematic flowchart of another communication method according to an embodiment of this application;
FIG. 16 is a schematic flowchart of another communication method according to an embodiment of this application;
FIG. 17 is a schematic flowchart of another communication method according to an embodiment of this application;
FIG. 18 is a schematic diagram of establishing an Xn-U tunnel between an MN and an SN in a dual connectivity scenario according to an example of this application;
FIG. 19 is a schematic flowchart of another communication method according to an embodiment of this application;
FIG. 20 is a schematic diagram of a structure of a communication apparatus according to an embodiment of this application; and
FIG. 21 is a schematic diagram of a structure of another communication apparatus according to an embodiment of this application.

### DESCRIPTION OF EMBODIMENTS

The following describes embodiments of this application with reference to the accompanying drawings.

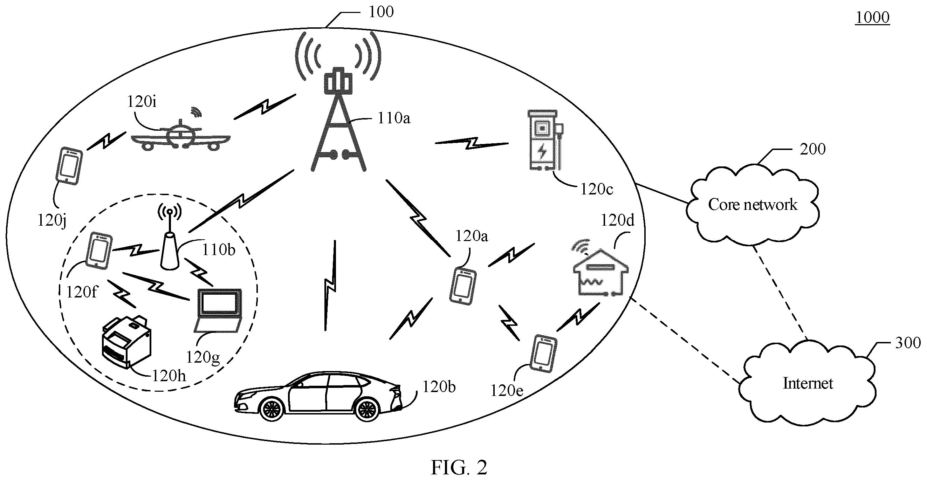

FIG. 2 is a schematic diagram of an architecture of a communication system 1000 to which an embodiment of this application is applied. As shown in FIG. 2, the communication system includes a radio access network 100 and a core network 200. Optionally, the communication system 1000 may further include the Internet 300. The radio access network 100 may include at least two radio access network nodes (for example, 110a and 110b in FIG. 2), and may further include at least one terminal device (for example, 120a to 120j in FIG. 2). The terminal device is connected to the radio access network node in a wireless manner, and the radio access network node is connected to the core network in a wireless or wired manner. The core network and the radio access network node may be independent different physical devices, or a function of the core network and a logical function of the radio access network node may be integrated into a same physical device, or some functions of the core network and some functions of the radio access network node may be integrated into a physical device. The terminal devices may be connected to each other, and the radio access network nodes may be connected to each other in a wired or wireless manner. It may be understood that FIG. 2 is only a schematic diagram. The communication system 1000 may further include another network device, for example, may further include a wireless relay device and a wireless backhaul device, which are not shown in FIG. 2. The radio access network node communicates with a core network control plane, to exchange signaling; and the radio access network node communicates with a core network user plane, to transmit and receive data.

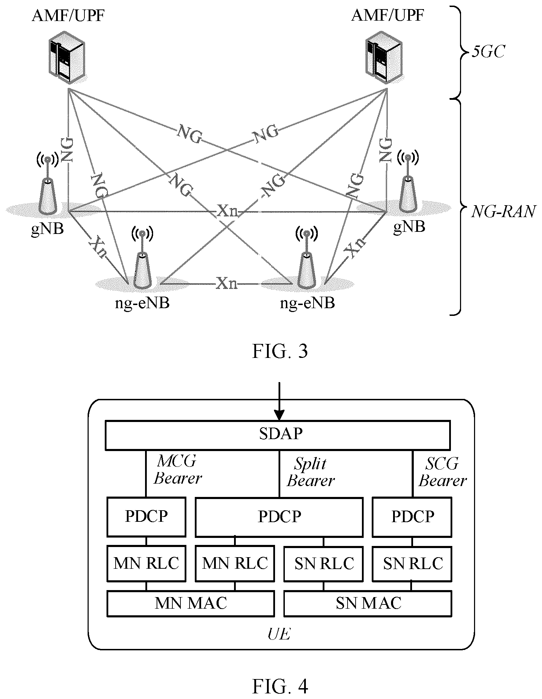

One of the at least two radio access network nodes may be an MN, and the other radio access network node may be an SN. The at least two radio access network nodes provide a dual connectivity service for the terminal device. FIG. 3 is a schematic diagram of a connection between a radio access network node and a core network. The radio access network node and the core network are connected through an NG interface, and the radio access network nodes are connected to each other through an Xn interface. FIG. 3 uses a 5G communication system as an example. The communication system includes a 5G core network (S<Superscript>th</Superscript> generation core, 5GC) and a next generation-radio access network (next generation-radio access network, NG-RAN). The 5GC includes an access and mobility management function (access and mobility management function, AMF) network element, a user plane function (user plane function, UPF) network element, and the like. The AMF mainly completes access and mobility management of the terminal device. The UPF mainly manages a UE plane. The NG-RAN consists of a plurality of gNBs or ng-eNBs connected to the 5GC. The gNBs are connected to each other, or the gNB is connected to the ng-eNB, or the ng-eNBs are connected to each other through the Xn interface; and the gNB is connected to the 5GC, or the ng-eNB is connected to the 5GC through the NG interface.

The radio access network node may be a base station (base station), an evolved NodeB (evolved NodeB, eNodeB), a transmission reception point (transmission reception point, TRP), a next generation NodeB (next generation NodeB, gNB) in a 5^{th} generation (5^{th} generation, 5G) mobile communication system, a next generation NodeB in a 6^{th} generation (6^{th} generation, 6G) mobile communication system, a base station in a future mobile communication system, an access node in a Wi-Fi system, or the like; or may be a module or a unit that implements some functions of the base station, for example, may be a central unit (central unit, CU), or may be a distributed unit (distributed unit, DU). The radio access network node may be a macro base station (for example, 110a in FIG. 2), or may be a micro base station or an indoor station (for example, 110b in FIG. 2), or may be a relay node or a donor (donor) node, a home base station, or the like. A specific technology and a specific device form used by the radio access network node are not limited in this embodiment of this application. For ease of description, the following uses an example in which a base station is used as the radio access network node for description.

The terminal device may also be referred to as a terminal, user equipment (user equipment, UE), a mobile station, a mobile terminal device, or the like. To simplify the descriptions, the terminal device is referred to as UE in the following. The UE may be widely used in various scenarios, for example, device-to-device (device-to-device, D2D), vehicle-to-everything (vehicle to everything, V2X) communication, machine type communication (machine-type communication, MTC), internet of things (internet of things, IoT), virtual reality, augmented reality, industrial control, autonomous driving, telemedicine, a smart grid, smart furniture, a smart office, a smart wearable, smart transportation, a smart city, and the like. The terminal device may be a mobile phone, a tablet computer, a computer with a wireless transceiver function, a wearable device, a vehicle, a drone, a helicopter, an airplane, a ship, a robot, a robotic arm, a smart home device, or the like. A specific technology and a specific device form used by the UE are not limited in this embodiment of this application.

The base station and the UE may be fixed or movable. The base station and the UE may be deployed on land, including indoor or outdoor, handheld or in-vehicle; may be deployed on a water surface; or may be deployed on aircraft, a balloon, or a satellite in the air. Application scenarios of the base station and the UE are not limited in this embodiment of this application.

Roles of the base station and the UE may be relative. For example, a helicopter or a drone 120i in FIG. 2 may be configured as a mobile base station, and for UE 120j accessing the radio access network 100 through the 120i, the UE 120i is the base station; however, for the base station 110a, the 120i is the UE. In other words, communication between the 110a and the 120i is performed by using a wireless air interface protocol. It is clear that the communication between the 110a and the 120i may also be performed by using the interface protocol between the base stations. In this case, for the 110a, the 120i is also the base station. Therefore, both the base station and the UE may be collectively referred to as communication apparatuses, the 110a and the 110b in FIG. 2 may be referred to as communication apparatuses having a base station function, and the 120a to the 120j in FIG. 2 may be referred to as communication apparatuses having a UE function.

Communication between the base station and the UE, between the base stations, and between the UEs may be performed by using a licensed spectrum, or may be performed by using an unlicensed spectrum, or may be performed by using both the licensed spectrum and the unlicensed spectrum. The communication may be performed by using a spectrum below 6 gigahertz (gigahertz, GHz), or may be performed by using a spectrum above 6 GHz, or may be performed by using both the spectrum below 6 GHz and the spectrum above 6 GHz. A spectrum resource used for wireless communication is not limited in this embodiment of this application.

In this embodiment of this application, a function of the base station may alternatively be performed by a module (for example, a chip) in the base station, or may be performed by a control subsystem that includes the base station function. The control subsystem that includes the base station function herein may be a control center in the foregoing application scenarios such as a smart grid, industrial control, intelligent transportation, and a smart city. The UE function may also be performed by a module (for example, a chip or a modem) in the UE, or may be performed by an apparatus that includes the UE function.

In this application, the base station sends a downlink signal or downlink information to the UE, where the downlink information is carried on a downlink channel; and the UE sends an uplink signal or uplink information to the base station, where the uplink information is carried on an uplink channel. A cell that is controlled by the base station and that serves the UE is referred to as a serving cell of the UE. When the UE communicates with the serving cell, the UE is further interfered by a signal from a neighboring cell.

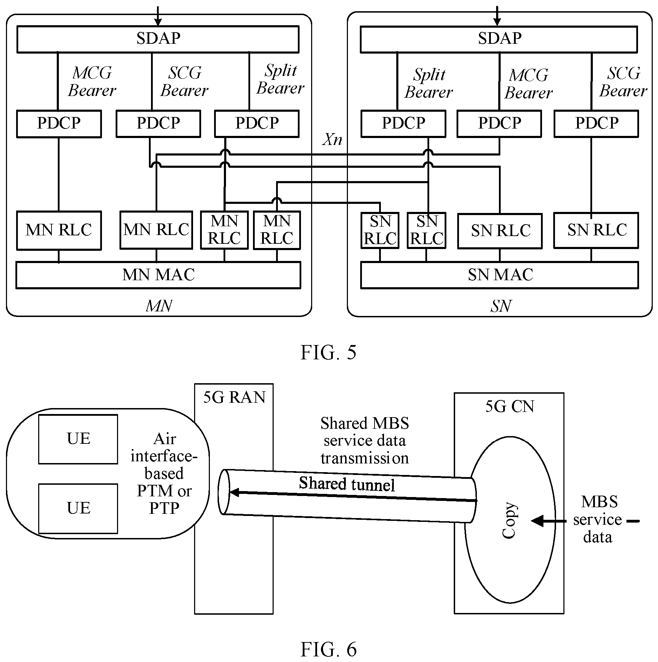

FIG. 1 describes a control plane architecture of a dual connection, and the following describes the architecture of the dual connection. User data may be transmitted between an MN and UE, or may be transmitted between an SN and the UE. FIG. 4 is a schematic diagram of an architecture of a dual connection on a UE side, and FIG. 5 is a schematic diagram of an architecture of a dual connection on a radio access network side. Included protocol layers are, from top to bottom, a service data adaptation protocol (service data adaptation protocol, SDAP) layer, a packet data convergence protocol (packet data convergence protocol, PDCP) layer, a radio link control (radio link control, RLC) layer, a media access control (media access control, MAC) layer, and a physical layer (physical layer, PHY) (not shown).

Based on a location of the PDCP layer, related bearers may be classified into an MN terminated bearer (MN terminated bearer) and an SN terminated bearer (SN terminated bearer). When data of a CN is transmitted to a PDCP layer of an MN, the data is referred to as the MN terminated bearer; or when the data of the CN is transmitted to a PDCP layer of an SN, the data is referred to as the SN terminated bearer. Based on a location of the RLC protocol/MAC layer/PHY, the bearers may be further classified into a master cell group bearer (master cell group bearer, MCG bearer), a secondary cell group bearer (secondary cell group bearer, SCG bearer), and a split bearer (split bearer).

For example, an SN terminated SCG bearer indicates that, in a downlink direction, the data is sent from the CN to a downlink address of the SN, the SN adds a PDCP packet header, and the data is sent to the UE through an air interface of the SN.

An SN terminated split bearer indicates that, in the downlink direction, the data is sent from the CN to the downlink address of the SN, and the SN adds the PDCP packet header, some data is sent to the UE through the air interface of the SN, and the other data is forwarded to the MN through an Xn interface, and then is sent to the UE through an air interface of the MN.

An MN terminated MCG bearer indicates that, in the downlink direction, the data is sent from the CN to a downlink address of the MN, the MN adds the PDCP packet header, and the data is sent to the UE through the air interface of the MN.

An MN terminated split bearer indicates that, in the downlink direction, the data is sent from the CN to the downlink address of the MN, and the MN adds the PDCP packet header, some data is sent to the UE through the air interface of the MN, and the other data is forwarded to the SN through the Xn interface, and then is sent to the UE through the air interface of the SN.

With the development of the 5^{th} generation wireless communication technology, after a progress of Rel-15 and Rel-16, a 5G communication system of Rel-17 may support an MBS. The MBS greatly improves data transmission efficiency on the air interface and a backhaul (backhaul) interface. As shown in FIG. 6, on an air interface, UEs that listen to a same MBS service may receive data in a group scheduling manner such as point to multiple points (point to multiple points, PTM), and a same data base station may send the data to the plurality of UEs by only sending the data once. For a backhaul interface, a core network does not transmit one copy of data to a related base station for each of a plurality of UEs like in a unicast service, but transmits only one copy of data between a same core network node and a same base station through a shared tunnel.

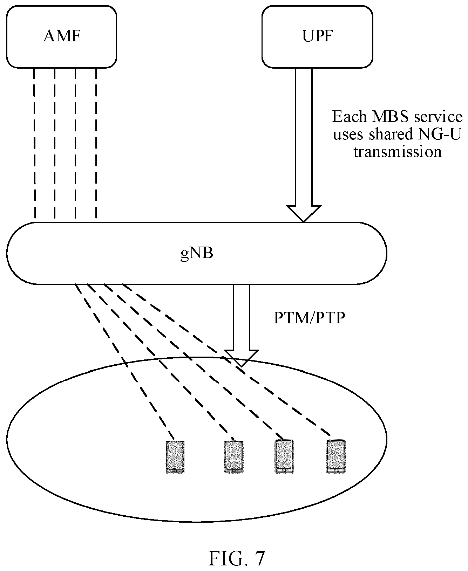

In an embodiment, as shown in FIG. 7, multicast is used as an example. A plurality of UEs are connected to an AMF network element through a gNB. When the plurality of UEs need to listen to a same MBS, a UPF provides only one copy of data and sends the data to the gNB through a shared NG interface (NG-U) tunnel. The gNB sends the data to the UE in a point-to-point (point to point, PTP) or PTM manner over the air interface. However, this embodiment does not support providing an MBS service for the UE by an SN in a dual connectivity scenario, or providing the MBS service for the UE by the SN and an MN jointly.

Based on the foregoing problem, this embodiment of this application provides a communication method. In the dual connectivity scenario, the UE establishes a dual connection to the MN and the SN. When the MN requests the SN to provide the MBS service for the UE of the MN, the MN sends a first request to the SN, where the first request includes a first identifier corresponding to the MBS. After receiving the first request, the SN sends a first response to the MN, where the first response indicates that the SN accepts to provide the MBS service for the UE. In this way, MBS service data is sent to the UE through the SN in the dual connectivity scenario.

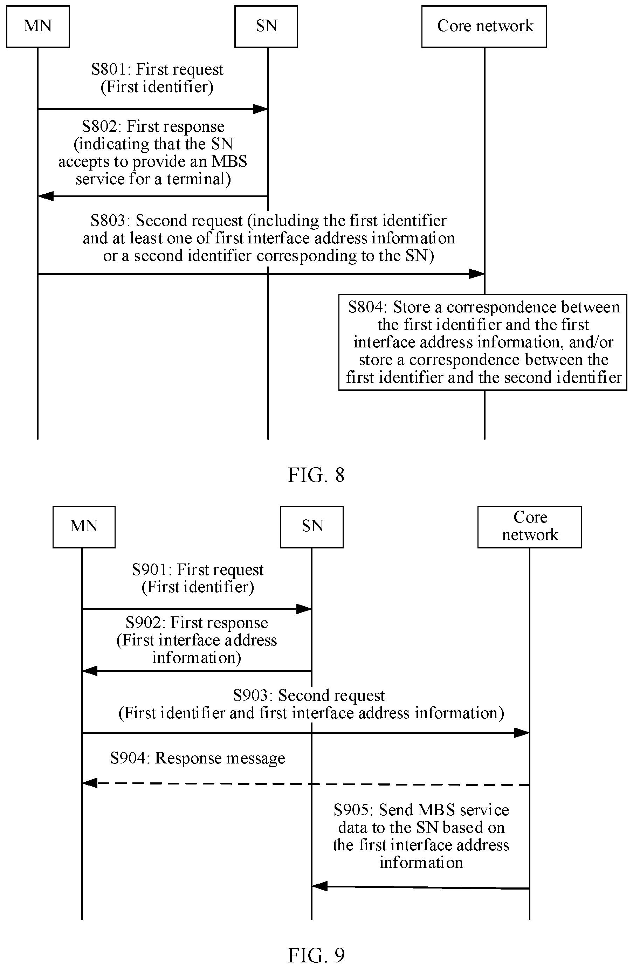

FIG. 8 is a schematic flowchart of a communication method according to an embodiment of this application, and the method may include the following steps.

S801: An MN sends a first request to an SN.

Correspondingly, the SN receives the first request.

In this embodiment, UE establishes a dual connection to the MN and the SN. When the MN requests the SN to provide an MBS service for the UE, the MN sends the first request to the SN. The first request requests the SN to provide the MBS service for the UE. The first request includes a first identifier corresponding to the MBS, for example, an MBS session identifier (MBS session ID). The first identifier corresponds to an MBS session that needs to provide a service, and all corresponding messages should carry the first identifier.

S802: The SN sends a first response to the MN based on the first request.

Correspondingly, the MN receives the first response.

After receiving the first request, the SN sends the first response to the MN. The first response indicates that the SN accepts to provide the MBS service for the UE.

In an implementation, the SN may perform communication by establishing an NG-U tunnel between the SN and a core network. Specifically, the SN may carry first interface address information in the first response, or the SN provides the first interface address information for the core network (for example, the SN forwards the first interface address information without using the MN), to establish the NG-U tunnel between the SN and the core network. The first interface address information is interface address information allocated by the SN for the MBS service. The first interface address information may also be referred to as NG-U interface tunnel address information of the secondary base station. In other words, the SN performs data transmission with the core network through an NG-U interface, for example, the core network sends downlink data to the SN through the NG-U interface.

In another implementation, the SN may perform communication by establishing an Xn-U tunnel between the SN and the MN. Further, the MN has established an NG-U tunnel between the MN and the core network. The SN may carry second interface address information in the first response, to establish the Xn-U tunnel between the SN and the MN. The second interface address information is interface address information allocated by the SN for the MBS service. The second interface address information may also be referred to as Xn-U interface tunnel address information of the secondary base station. In other words, the SN performs data transmission with the MN through an Xn-U interface, for example, the MN sends the downlink data to the SN through the Xn-U interface.

In still another implementation, the MBS service already exists in the SN, or a data transmission channel of the MBS is already established on the SN. For example, an NG-U interface for the MBS has been established between the SN and the core network, or an Xn-U interface for the MBS has been established between the SN and another MN, so that the SN may receive MBS service data through an established data transmission channel.

Further, the SN provides air interface configuration information of the MBS service in the first response, and the MN sends the air interface configuration information of the MBS service to the UE; or after receiving the first request, the SN sends the MBS air interface configuration information to the UE.

S803: The MN sends a second request to the core network.

Correspondingly, the core network receives the second request.

The second request includes the first identifier.

Further, the second request further includes the first interface address information and/or a second identifier corresponding to the SN.

When the second request includes the first interface address information but does not include the second identifier corresponding to the SN, the core network does not perceive existence of the SN. The core network only knows that the MN serves the UE. In this case, minor changes are made to current technologies, and the core network still considers that the MN is a serving node of the UE. When the second request includes the second identifier corresponding to the SN but does not include the first interface address information, the core network may perceive the existence of the SN based on the second identifier corresponding to the SN. The core network knows that the SN serves the UE. In this case, the core network knows that the MBS service of the UE is provided by the SN, and may establish a shared tunnel between the core network and the SN, and subsequent session activation or deactivation may also be directly sent to the SN.

Further, the core network sends data of the multicast broadcast service corresponding to the first identifier to the SN based on the first identifier, and at least one of the first interface address information or the second identifier. Alternatively, the core network sends the data of the multicast broadcast service corresponding to the first identifier to the MN based on the first identifier, and the data is forwarded to the SN by using the MN.

Optionally, this embodiment of this application further includes the following step S804.

S804: The core network stores a correspondence between the first identifier and the first interface address information, and/or stores a correspondence between the first identifier and the second identifier.

After receiving the second request, the core network stores the correspondence between the first identifier and the first interface address information, or in other words, records data of the MBS of the UE and sends the data to a first interface address; and/or stores the correspondence between the first identifier and the second identifier, or in other words, records that the MBS service of the UE is provided by an SN corresponding to the second identifier, or adds the SN corresponding to the second identifier to a list of radio access network nodes providing the MBS service.

According to the communication method provided in this embodiment of this application, in the dual connectivity scenario, the UE establishes the dual connection to the MN and the SN. When the MN requests the SN to provide the MBS service for the UE of the MN, the MN sends the first request to the SN, where the first request includes the first identifier corresponding to the MBS. After receiving the first request, the SN sends the first response to the MN, where the first response indicates that the SN accepts to provide the MBS service for the UE. In this way, the MBS service data is sent to the UE through the SN in the dual connectivity scenario.

FIG. 9 is a schematic flowchart of another communication method according to an embodiment of this application, and the method may include the following steps.

S901: An MN sends a first request to an SN.

Correspondingly, the SN receives the first request.

In this embodiment, the MN requests to establish a new shared NG-U tunnel to transmit a piece of MBS service data. Therefore, the MN sends the first request to the SN. The first request may be referred to as an SN addition request (SN Addition Request) or an SN modification request (SN Modification Request). The first request requests the SN to provide the MBS service for UE. The first request includes a first identifier corresponding to the MBS service, for example, an MBS session identifier. Optionally, the first request may further include an MBS quality of service flow list (MBS QoS flow list).

S902: The SN sends a first response to the MN based on the first request.

Correspondingly, the MN receives the first response.

The first response indicates that the SN accepts to provide the MBS service for the UE. The first response includes first interface address information between the SN and a core network. The first interface address information is interface address information allocated by the SN for the MBS service. The first interface address information may also be referred to as NG-U interface tunnel address information of the secondary base station. In other words, the SN performs data transmission with the core network through the NG-U interface. Specifically, the first interface address information includes an IP address of the SN and a general packet radio service tunneling protocol-tunnel endpoint identifier (GPRS tunneling protocol-tunnel endpoint identifier, GTP-TEID).

In an implementation, the SN provides air interface configuration information of the MBS service in the first response, and the MN sends the air interface configuration information of the MBS service to the UE.

In another implementation, after receiving the first request, the SN sends the MBS air interface configuration information to the UE.

S903: The MN sends a second request to the core network.

Correspondingly, the core network receives the second request.

The core network includes an AMF, a session management function (session management function, SMF) network element, and an MB-SMF. The core network includes an MB-UPF and a UPF. Step S903 is specifically: The MN sends the second request to the AMF/SMF or a multicast broadcast-session management function (multicast/broadcast-session management function, MB-SMF), and the AMF/SMF sends a first interface address to the MB-UPF, or to the MB-UPF through the MB-SMF. A path for the MN to send a message to the core network described in the following is the same as or similar to this.

The second request includes the first identifier and the first interface address information. In other words, the MN sends the second request to the core network, provides the obtained first identifier and first interface address information, and requests the core network to send MBS service data corresponding to the first identifier to the first interface address information.

Further, in this embodiment, from a perspective of the core network, the UE is served by the MN, and the CN does not perceive existence of the SN. Therefore, if the MN has previously requested the core network to send the MBS service data to another piece of interface address information, in the second request, to enable the core network to distinguish different pieces of interface address information, the MN may indicate that interface address information carried this time is new address information. Alternatively, different MBS reference identifiers (MBS reference identifiers) or MBS service identifiers (MBS transaction identifiers) are allocated to the first interface address information, and different pieces of interface address information may be distinguished with reference to the first identifier, the MBS reference identifier, and/or the MBS service identifier. Alternatively, the second request further includes an interface address information list, or the interface address information list is carried in another message, where the interface address information list includes interface address information of the MN, interface address information of the SN, and interface address information of another SN, and the core network sends a same piece of the MBS service data to interface addresses in the interface address information list.

S904: The core network sends a response message to the MN in response to the second request.

Correspondingly, the MN receives the response message sent by the AMF. This step is optional and is represented by a dotted line in the figure. The response message may include the first identifier, and may further include the MBS reference identifier or the MBS service identifier. Specifically, the MB-SMF/AMF/SMF sends the response message to the MN. A path for the core network to send a message to the MN described in the following is the same as or similar to this.

S905: The core network sends the MBS service data to the SN based on the first interface address information.

Correspondingly, the SN receives the MBS service data. Specifically, the core network sends the MBS service data through the shared NG-U tunnel.

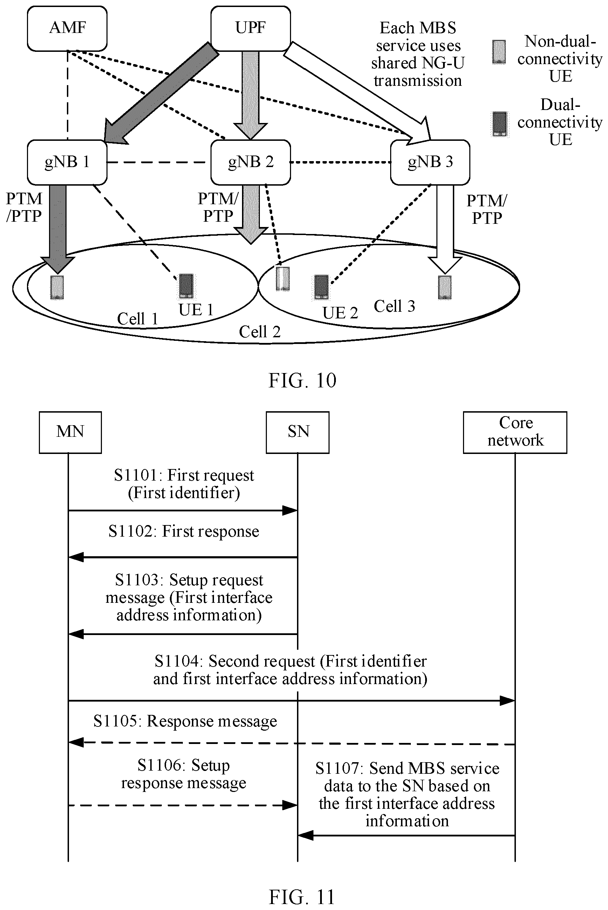

FIG. 10 is a schematic diagram of establishing an NG-U tunnel between a core network and an SN in a dual connectivity scenario. UE 1 is used as an example. A gNB 1 is used as an MN serving the UE 1, and establishes an NGAP connection of the UE to the core network. The gNB 1 requests a gNB 2 to provide a service of an MBS session for the UE 1 as the SN. The gNB 2 accepts the request and provides first interface address information. The core network sends MBS service data to the gNB 2 based on the first interface address information.

Further, when transmission of the MBS service data is completed, release of a data transmission channel of the MBS service may be triggered. When the release of the data transmission channel is triggered by a radio access network node, the radio access network node triggers the release of the data transmission channel only when all UEs served by the radio access network node as the MN or the SN stop receiving the MBS service data. When the release of the data transmission channel is triggered by the core network or the MN, the SN agrees to release the data transmission channel only when all UEs served by the SN stop receiving the MBS service data. Optionally, when the MN receives an MBS session deactivation request or an MBS session release request sent by the core network, the MN forwards corresponding information to the SN.

According to the communication method provided in this embodiment of this application, a manner of establishing and releasing the NG-U tunnel from the core network to the SN is provided, so that the SN can provide the MBS service for the UE.

FIG. 11 is a schematic flowchart of another communication method according to an embodiment of this application, and the method may include the following steps.

S1101: An MN sends a first request to an SN.

Correspondingly, the SN receives the first request.

In this embodiment, from a perspective of a core network, UE is served by the MN, and the CN does not perceive existence of the SN accordingly. For specific implementation of this step, refer to the foregoing step S901.

S1102: The SN sends a first response to the MN based on the first request.

Correspondingly, the MN receives the first response.

A difference between this step and the foregoing step S902 lies in that the first response only indicates that the SN accepts to provide an MBS service for the UE. The first response does not include first interface address information.

The first response may include MBS air interface configuration information, so that the MN sends the MBS air interface configuration information to the UE. Alternatively, the first response does not include the MBS air interface configuration, and the SN directly sends the MBS air interface configuration to the UE.

S1103: The SN sends a setup request message to the MN.

Correspondingly, the MN receives the setup request message.

A difference from the embodiment shown in FIG. 9 lies in that, in this embodiment, the SN sends the first interface address information to the MN through a separate setup request message. In other words, the setup request message includes the first interface address information between the SN and the core network. A meaning of the first interface address information is the same as that in the foregoing descriptions, and details are not described herein again.

S1104: The MN sends a second request to the core network.

Correspondingly, the core network receives the second request.

For specific implementation of this step, refer to the foregoing step S903.

S1105: The core network sends a response message to the MN in response to the second request.

Correspondingly, the MN receives the response message. This step is optional and is represented by a dotted line in the figure.

For specific implementation of this step, refer to the foregoing step S904.

S1106: The MN sends a setup response message to the SN in response to the setup request message.

Correspondingly, the SN receives the setup response message. The setup response message indicates that an NG-U tunnel between the core network and the SN is successfully established. This step is optional and is represented by a dotted line in the figure.

S1107: The core network sends MBS service data to the SN based on the first interface address information.

Correspondingly, the SN receives the MBS service data.

For specific implementation of this step, refer to the foregoing step S905.

For release of a data transmission channel of the MBS service, refer to the descriptions in the embodiment shown in FIG. 9.

According to the communication method provided in this embodiment of this application, a manner of establishing and releasing the NG-U tunnel from the core network to the SN is provided, so that the SN can provide the MBS service for the UE.

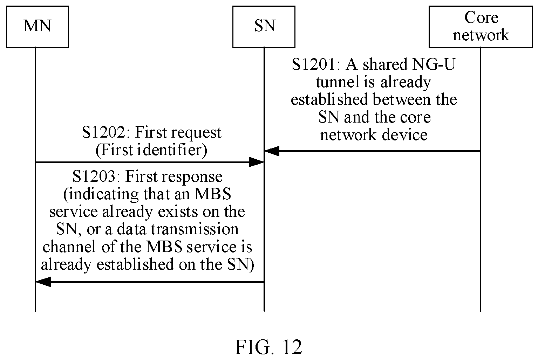

FIG. 12 is a schematic flowchart of another communication method according to an embodiment of this application, and the method may include the following steps.

S1201: A shared NG-U tunnel has been established between an SN and a core network.

S1202: The MN sends a first request to the SN.

Correspondingly, the SN receives the first request.

For specific implementation of this step, refer to the foregoing step S901.

S1203: The SN sends a first response to the MN based on the first request.

Correspondingly, the MN receives the first response.

In this embodiment, from a perspective of the core network, the UE is served by the MN, and the CN does not perceive existence of the SN accordingly. This embodiment is different from the embodiment shown in FIG. 9 or FIG. 11 in that the shared NG-U tunnel corresponding to an MBS service already exists on the SN. When the MN requests the SN to provide the MBS service for the UE of the MN, the SN sends the first response, where the first response indicates that the SN accepts to provide the MBS service for the UE. In addition, the first response further indicates that the MBS service already exists on the SN, or a data transmission channel of the MBS service is already established on the SN, to prevent the MN from triggering re-establishment of a tunnel.

In an alternative manner, the first response may not include first interface address information to implicitly indicate that the MBS service already exists on the SN, or the data transmission channel of the MBS service is already established on the SN.

In another alternative manner, the sending step S1103 may not be triggered to implicitly indicate that the MBS service already exists on the SN, or the data transmission channel of the MBS service is already established on the SN.

For release of the data transmission channel of the MBS service, refer to the descriptions in the embodiment shown in FIG. 9.

According to the communication method provided in this embodiment of this application, when the MN requests the SN to provide the MBS service for UE of the MN, and when the shared NG-U tunnel corresponding to the MBS service already exists on the SN, the SN may indicate that the MBS service already exists on the SN, or the data transmission channel of the MBS service is already established on the SN, to prevent repeatedly establishing a tunnel for the MBS service, thereby reducing communication overheads and saving communication resources.

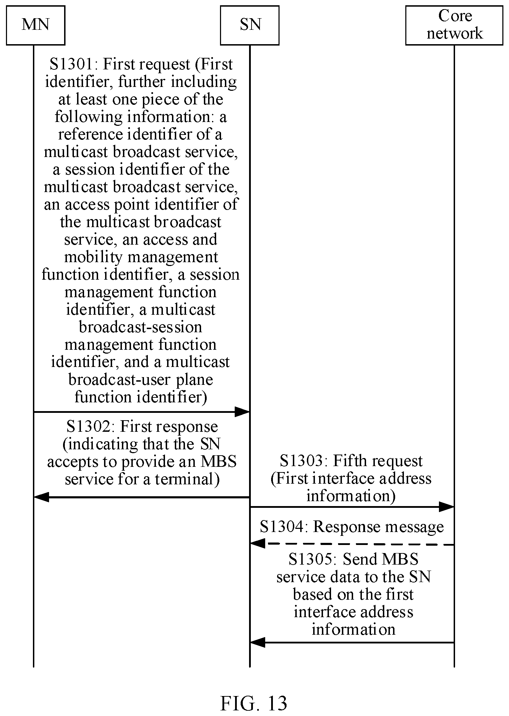

FIG. 13 is a schematic flowchart of another communication method according to an embodiment of this application, and the method may include the following steps.

S1301: An MN sends a first request to an SN.

Correspondingly, the SN receives the first request.

In this embodiment, from a perspective of a core network, UE is served by the MN, and the CN does not perceive existence of the SN accordingly. The first request requests the SN to provide an MBS service for the UE. The first request includes a first identifier corresponding to the MBS service, and further includes at least one piece of the following information: a reference identifier of the multicast broadcast service, a session identifier of the multicast broadcast service, an access point (access point, AP) identifier of the multicast broadcast service, an access and mobility management function identifier, a session management function identifier, a multicast broadcast-session management function identifier, and a multicast broadcast-function identifier.

S1302: The SN sends a first response to the MN based on the first request.

Correspondingly, the MN receives the first response.

A difference between this step and the foregoing step S902 lies in that the first response only indicates that the SN accepts to provide the MBS service for the UE. The first response does not include first interface address information.

S1303: The SN sends a fifth request to the core network based on the first request.

Correspondingly, the core network receives the fifth request.

After obtaining the at least one piece of information, the SN may request the MBS service data from the core network without sending the request through the MN. The fifth request includes the first interface address information. The fifth request requests to send the MBS service data to a first interface address. Optionally, the fifth request may further include an identifier of the MN, for example, a base station identifier, which indicates that the SN requests the MBS service data for the MN.

S1304: The core network sends a response message to the SN in response to the fifth request.

Correspondingly, the SN receives the response message. This step is optional and is represented by a dotted line in the figure. The response message may include the first identifier, and may further include an MBS reference identifier or an MBS service identifier, or may be null.

S1305: The core network sends the MBS service data to the SN based on the first interface address information.

Correspondingly, the SN receives the MBS service data.

For release of a data transmission channel of the MBS service, refer to the descriptions in the embodiment shown in FIG. 9.

According to the communication method provided in this embodiment of this application, a manner of establishing and releasing an NG-U tunnel from the core network to the SN is provided, so that the SN can provide the MBS service for the UE.

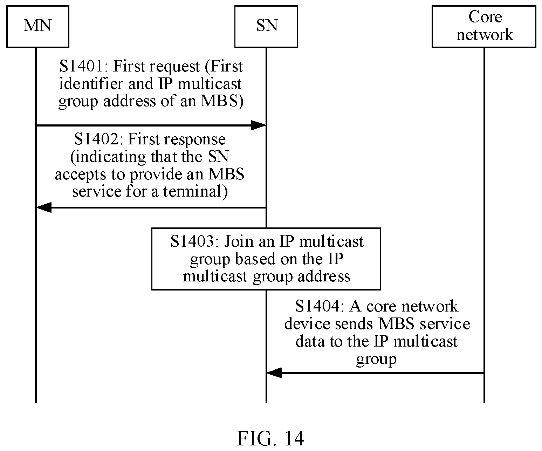

FIG. 14 is a schematic flowchart of another communication method according to an embodiment of this application, and the method may include the following steps.

S1401: An MN sends a first request to an SN.

Correspondingly, the SN receives the first request.

In this embodiment, from a perspective of a core network, UE is served by the MN, and the CN does not perceive existence of the SN accordingly. For specific implementation of this step, refer to step S901. In addition, the first request further includes an Internet Protocol (internet protocol, IP) multicast group address of an MBS, and the IP multicast group address is used to receive MBS service data.

For one MBS session, the core network allocates one IP multicast group address. A related radio access network node may join an IP multicast group to obtain the MBS service data. The core network sends only one copy of data to the IP multicast group address.

S1402: The SN sends a first response to the MN based on the first request.

Correspondingly, the MN receives the first response.

A difference between this step and the foregoing step S902 lies in that the first response only indicates that the SN accepts to provide the MBS service for the UE. The first response does not include first interface address information.

S1403: The SN joins an IP multicast group based on the IP multicast group address.

Specifically, the SN joins the IP multicast group based on the IP multicast group address corresponding to the MBS session sent by the MN, and waits to receive the MBS service data sent to the IP multicast group.

S1404: The core network sends the MBS service data to the IP multicast group.

Correspondingly, the SN receives the MBS service data from the IP multicast group.

Specifically, the core network sends only one copy of the MBS service data to the IP multicast group address. After joining the IP multicast group, the SN may obtain the MBS service data.

For release of a data transmission channel of the MBS service, refer to the descriptions in the embodiment shown in FIG. 9.

According to the communication method provided in this embodiment of this application, when the MN requests the SN to provide the MBS service for UE of the MN, the MN provides an IP multicast group address. When the SN accepts to provide the MBS service for the UE, the SN joins the IP multicast group address, and may obtain the MBS service data. The core network needs to send only one copy of the MBS service data to the IP multicast group address, so that communication efficiency is improved and communication overheads are reduced.

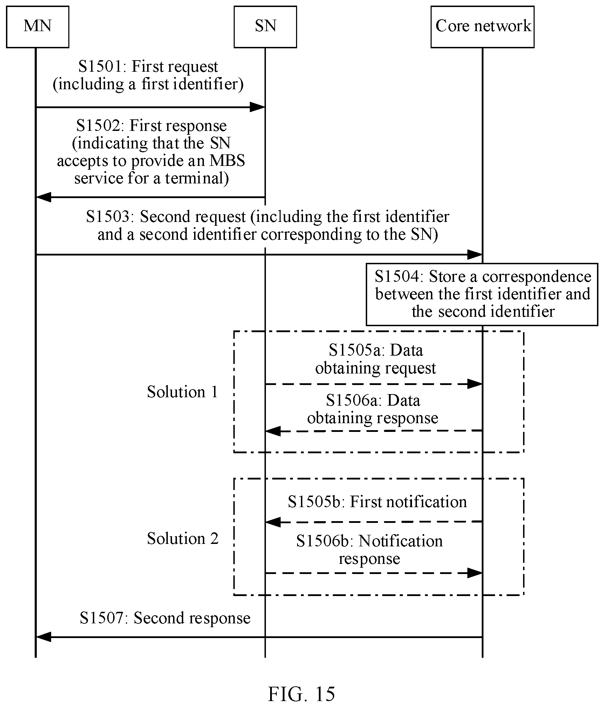

FIG. 15 is a schematic flowchart of another communication method according to an embodiment of this application, and the method may include the following steps.

S1501: An MN sends a first request to an SN.

Correspondingly, the SN receives the first request.

In this embodiment, the MN requests to establish an additional shared NG-U tunnel to transmit a copy of MBS service data. Therefore, the MN sends the first request to the SN. The first request may be referred to as an SN addition request or an SN modification request. The first request requests the SN to provide an MBS service for UE. The first request includes a first identifier corresponding to the MBS service, for example, an MBS session identifier.

S1502: The SN sends a first response to the MN based on the first request.

Correspondingly, the MN receives the first response.

The first response indicates that the SN accepts to provide the MBS service for the UE.

Optionally, when the shared NG-U tunnel already exists on the SN, the first response may further indicate that the MBS service already exists on the SN, or a data transmission channel of the MBS service is already established on the SN, and a subsequent process does not need to be performed. A core network may send the MBS service data to the SN through the existing shared NG-U tunnel.

S1503: The MN sends a second request to the core network.

Correspondingly, the core network receives the second request.

The second request includes the first identifier and a second identifier corresponding to the SN.

The MN sends the second request to the core network, to notify the core network that the SN indicated by the second identifier provides the MBS service for the UE, so that the core network can perceive the SN and clearly know that the MBS data is sent to the SN. Specifically, the MN sends the second request to an SMF. The second request may be specifically a packet data unit session resource modify indication (packet data unit session resource modify indication).

Optionally, the method further includes a step S1504.

S1504: The core network stores a correspondence between the first identifier and the second identifier.

After receiving the second request, the core network stores the correspondence between the first identifier and the second identifier, or in other words, records that the MBS service of the UE is provided by the SN corresponding to the second identifier, or adds the SN corresponding to the second identifier to a list of radio access network nodes providing the MBS service.

S1505a: The SN sends a data obtaining request to the core network, where the data obtaining request requests the core network to provide the MBS service data for the SN.

Correspondingly, the core network receives the data obtaining request.

Specifically, the SN sends the data obtaining request to an MB-SMF through an AMF.

S1506a: The core network sends a data obtaining response to the SN in response to the data obtaining request.

Correspondingly, the SN receives the data obtaining response.

Specifically, the MB-SMF sends the data obtaining response to the SN through the AMF.

S1505a and S1506a are a solution 1. Alternatively, the method may further include a solution 2:

S1505b: The core network sends a first notification to the SN based on the second identifier.

Correspondingly, the SN receives the first notification.

The first notification notifies the SN that the MBS session is started.

Specifically, the MB-SMF sends the first notification to the SN through the AMF.

S1506b: The SN sends a notification response to the core network in response to the first notification.

Correspondingly, the core network receives the notification response.

The notification response indicates that the first notification is received.

Specifically, the SN sends the notification response to the MB-SMF through the AMF.

S1505b and S1506b are the solution 2.

Either the solution 1 or the solution 2 may be selected for execution.

S1507: The core network sends a second response to the MN in response to the second request.

Correspondingly, the MN receives the second response.

Specifically, the SMF sends the second response to the MN. The second response may be specifically a packet data unit session resource modify confirm (packet data unit session resource modify confirm) message.

According to the communication method provided in this embodiment of this application, a manner of establishing and releasing the NG-U tunnel from the core network to the SN is provided, so that the SN can provide the MBS service for the UE.

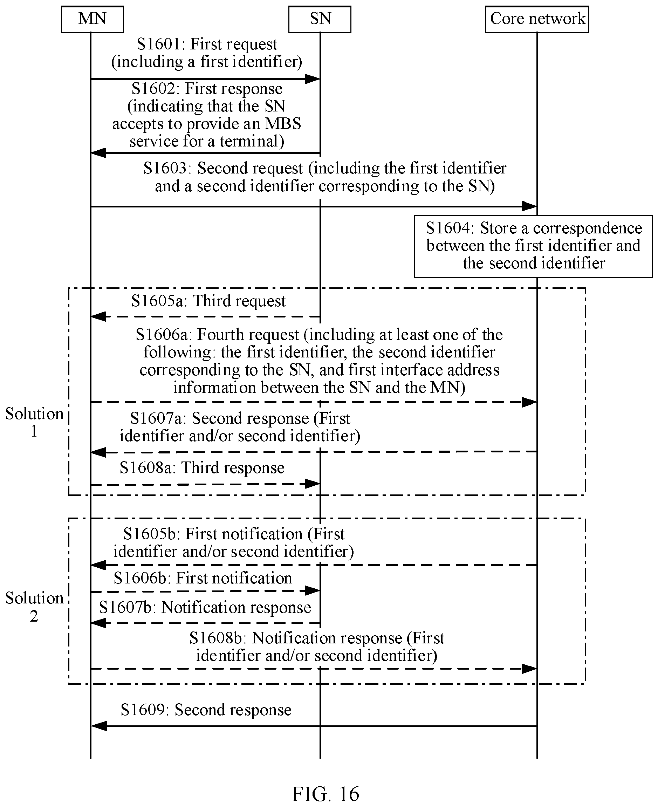

FIG. 16 is a schematic flowchart of another communication method according to an embodiment of this application, and the method may include the following steps.

S1601: An MN sends a first request to an SN.

Correspondingly, the SN receives the first request.

For specific implementation of this step, refer to step S1501.

S1602: The SN sends a first response to the MN based on the first request.

Correspondingly, the MN receives the first response.

For specific implementation of this step, refer to step S1502.

S1603: The MN sends a second request to a core network.

Correspondingly, the core network receives the second request.

For specific implementation of this step, refer to step S1503.

S1604: The core network stores a correspondence between a first identifier and a second identifier.

For specific implementation of this step, refer to step S1504.

S1605a: The SN sends a third request to the MN.

Correspondingly, the MN receives the third request.

The third request includes at least one of the following: the first identifier, the second identifier corresponding to the SN, and first interface address information between the SN and the core network.

Optionally, the third request and the first response may also be a same message. In other words, the SN may further include at least one of the following in the first response: the first identifier, the second identifier corresponding to the SN, and the first interface address information between the SN and the core network.

S1606a: The MN sends a fourth request to the core network.

Correspondingly, the core network receives the fourth request.

In this embodiment, the fourth request is forwarded through the MN. Therefore, the fourth request carries the second identifier corresponding to the SN, and is used to distinguish that the message is for the SN rather than the MN. Specifically, the fourth request includes at least one of the following: the first identifier, the second identifier corresponding to the SN, and the first interface address information between the SN and the core network.

S1607a: The core network sends a second response to the MN.

Correspondingly, the MN receives the second response.

The second response includes the first identifier, or includes the second identifier, or includes the first identifier and the second identifier.

S1608a: The MN sends a third response to the SN.

Correspondingly, the SN receives the third response.

The third response includes the first identifier, or includes the second identifier, or includes the first identifier and the second identifier.

S1605a to S1608a are a solution 1. Alternatively, the method may further include a solution 2:

S1605b: The core network sends a first notification to the MN based on the second identifier.

Correspondingly, the MN receives the first notification.

The first notification notifies the SN that an MBS session is started.

Specifically, an MB-SMF sends the first notification to the MN through an AMF.

S1606b: The MN forwards the first notification to the SN.

Correspondingly, the SN receives the first notification.

In this embodiment, the first notification is forwarded through the MN. Therefore, the first notification carries the second identifier corresponding to the SN, and is used to distinguish that the message is for the SN rather than the MN. The first identifier may also be carried.

S1607b: The SN sends a notification response to the MN in response to the first notification.

Correspondingly, the MN receives the notification response.

The notification response indicates that the first notification is received.

S1608b: The MN forwards the notification response to the core network.

Correspondingly, the core network receives the notification response.

Specifically, the MN forwards the notification response to the MB-SMF through the AMF.

S1605b to S1608b are the solution 2.

Either the solution 1 or the solution 2 may be selected for execution.

S1609: The core network sends a second response to the MN in response to the second request.

Correspondingly, the MN receives the second response.

For specific implementation of this step, refer to step S1607.

According to the communication method provided in this embodiment of this application, a manner of establishing and releasing an NG-U tunnel from the core network to the SN is provided, so that the SN can provide an MBS service for UE.

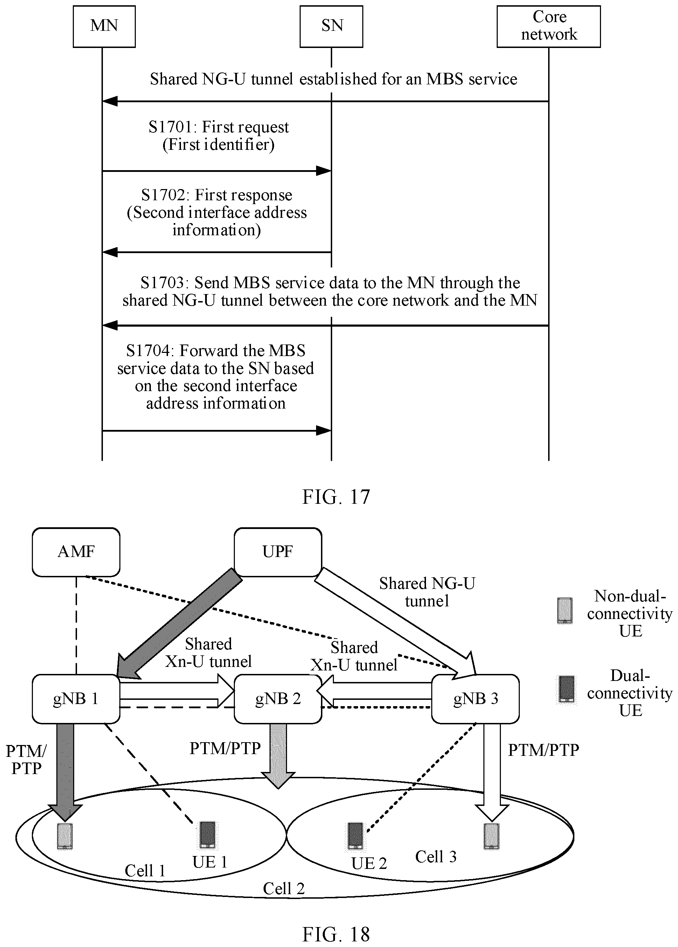

FIG. 17 is a schematic flowchart of another communication method according to an embodiment of this application, and the method may include the following steps.

S1701: An MN sends a first request to an SN.

Correspondingly, the SN receives the first request.

The first request requests the SN to provide an MBS service for UE. The first request includes a first identifier corresponding to the MBS. For specific implementation of this step, refer to step S901.

S1702: The SN sends a first response to the MN.

Correspondingly, the MN receives the first response.

The first response indicates that the SN accepts to provide the MBS service for the UE.

In this embodiment, the first response includes second interface address information between the SN and the MN. The second interface address information is interface address information allocated by the SN for the MBS service. The second interface address information may also be referred to as Xn-U interface tunnel address information of the secondary base station, that is, the SN performs data transmission with the MN through an Xn-U interface.

Optionally, if the SN already provides the MBS service for another UE, that is, the SN already has MBS service data from another MN or a core network, when the MN requests the SN to provide the MBS service for UE of the MN, the SN sends the first response, where the first response indicates that the SN accepts to provide the MBS service for the UE. In this case, the first response may not include the second interface address information to implicitly indicate that the MBS service already exists on the SN, or a data transmission channel of the MBS service is established on the SN.

S1703: The core network sends the MBS service data to the MN through a shared NG-U tunnel between the core network and the MN.

Correspondingly, the MN receives the MBS service data.

S1704: The MN forwards the MBS service data to the SN based on the second interface address information.

Correspondingly, the SN receives the MBS service data.

Optionally, if a plurality of MNs send same MBS service data to the SN, the SN may remove a duplicate packet and send only one copy of data over an air interface based on a packet data convergence protocol (packet data convergence protocol, PDCP) sequence number (sequence number, SN), or an MBS quality of service (quality of service, QoS) Flow SN and a GTP-U SN. Specifically:
(1) The MN sends a PDCP PDU to the SN, and the SN removes a duplicate packet based on the PDCP SN.
(2) The MN sends an IP packet to the SN (where the core network sends the IP packet to the MN, and the MN does not process the IP packet at an SDAP layer and a PDCP layer), and the SN removes a duplicate packet based on the MBS QoS Flow SN and/or the GTP-U SN.

FIG. 18 is a schematic diagram of establishing an Xn-U tunnel between an MN and an SN in a dual connectivity scenario according to an example of this application. UE 1 establishes a dual connection to a gNB 1 and a gNB 2. UE 2 establishes a dual connection to the gNB 2 and a gNB 3. The gNB 1 serves as the MN and has established an NG-U tunnel with a core network. When the gNB 1 requests the gNB 2 as the SN to provide an MBS service for the UE 1 in a cell 1 served by the gNB 1, the gNB 2 sends a response to the gNB 1, indicating that the gNB 2 accepts to provide an MBS service for the UE 1, and carries second interface address information allocated by the gNB 2. When the gNB 1 receives MBS service data sent by the core network through the NG-U tunnel, the gNB 1 sends the MBS service data to the gNB 2 through a shared Xn-U tunnel. The gNB 2 then sends the MBS service data to the UE 1 over an air interface. A process in which the gNB 3 serves as the MN to request the gNB 2 to provide the MBS service for the UE 2 in a cell 3 served by the gNB 3 is similar to the foregoing descriptions.

In this embodiment, the MBS service data is sent by the MN to the SN, and the core network does not need to send a plurality of copies of data, and does not need to perceive existence of the SN.

According to the communication method provided in this embodiment of this application, a manner of establishing the Xn-U tunnel from the MN to the SN is provided, so that the SN can provide the MBS service for the UE.

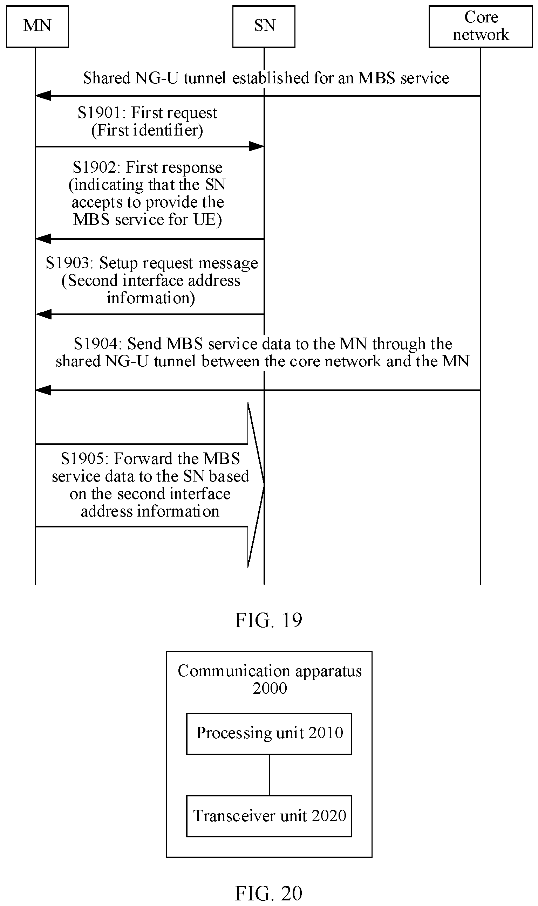

FIG. 19 is a schematic flowchart of another communication method according to an embodiment of this application, and the method may include the following steps.

S1901: An MN sends a first request to an SN.

Correspondingly, the SN receives the first request.

For specific implementation of this step, refer to step S1701.

S1902: The SN sends a first response to the MN.

Correspondingly, the MN receives the first response.

The first response indicates that the SN accepts to provide an MBS service for UE. A difference from step S1702 lies in that the first response does not include second interface address information.

S1903: The SN sends a setup request message to the MN.

Correspondingly, the MN receives the setup request message.

A difference from the embodiment shown in FIG. 17 lies in that, in this embodiment, the SN sends the second interface address information to the MN through the separate setup request message. In other words, the setup request message includes second interface address information between the SN and a core network. A meaning of the second interface address information is the same as that in the foregoing descriptions, and details are not described herein again.

S1904: The core network sends MBS service data to the MN through a shared NG-U tunnel between the core network and the MN.

Correspondingly, the MN receives the MBS service data.

S1905: The MN forwards the MBS service data to the SN based on the second interface address information.

Correspondingly, the SN receives the MBS service data.

In this embodiment, the MBS service data is sent by the MN to the SN, and the core network does not need to send a plurality of copies of data, and does not need to perceive existence of the SN.

According to the communication method provided in this embodiment of this application, a manner of establishing an Xn-U tunnel from the MN to the SN is provided, so that the SN can provide the MBS service for the UE.

It may be understood that, to implement functions in the foregoing embodiments, the MN, the SN, or the core network includes a corresponding hardware structure and/or a corresponding software module for performing each function. A person skilled in the art should easily be aware that units and method steps in the examples described with reference to embodiments disclosed in this application can be implemented in a form of hardware or a combination of hardware and computer software in this application. Whether a function is executed in a manner of hardware or hardware driven by computer software depends on specific application scenarios and design constraint conditions of the technical solutions.

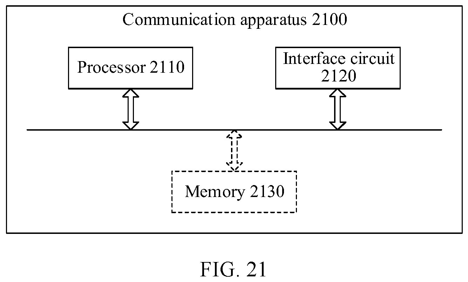

FIG. 20 and FIG. 21 are schematic diagrams of structures of possible communication apparatuses according to embodiments of this application. These communication apparatuses may be configured to implement functions of the MN, the SN, or the core network in the foregoing method embodiments, and therefore, can also achieve beneficial effects of the foregoing method embodiments. In this embodiment of this application, the communication apparatus may be the base station 110a or 110b shown in FIG. 2, or may be the core network 200 shown in FIG. 2, or may be a module (such as a chip) applied to the base station or the core network.

As shown in FIG. 20, a communication apparatus 2000 includes a processing unit 2010 and a transceiver unit 2020. The communication apparatus 2000 is configured to implement a function of the MN, the SN, or the core network in the method embodiments shown in FIG. 8 to FIG. 19.

When the communication apparatus 2000 is configured to implement the function of the MN in the method embodiments shown in FIG. 8 to FIG. 19, the transceiver unit 2020 is configured to send a first request to a secondary radio access network node, where the first request requests the secondary radio access network node to provide a multicast broadcast service for a terminal device, the first request includes a first identifier corresponding to the multicast broadcast service; and the transceiver unit 2020 is further configured to receive a first response from the secondary radio access network node, where the first response indicates that the secondary radio access network node accepts to provide the multicast broadcast service for the terminal device.

Optionally, the transceiver unit 2020 is further configured to send a second request to the core network, where the second request includes the first identifier and first interface address information, and/or the second request includes the first identifier and a second identifier corresponding to the secondary radio access network node.

Optionally, the transceiver unit 2020 is further configured to receive a third request from the secondary radio access network node, where the third request includes at least one of the following: the first identifier, the second identifier corresponding to the secondary radio access network node, and the first interface address information between the secondary radio access network node and the core network; the transceiver unit 2020 is further configured to send a fourth request to the core network, where the fourth request includes at least one of the following: the first identifier, the second identifier, and the first interface address information; the transceiver unit 2020 is further configured to receive a second response from the core network, where the second response includes the first identifier and optionally includes the second identifier; and the transceiver unit 2020 is further configured to send a third response to the secondary radio access network node, where the third response includes the first identifier and optionally includes the second identifier.

Optionally, the transceiver unit 2020 is further configured to receive data of the multicast broadcast service from the core network; and the transceiver unit 2020 forwards the data to the secondary radio access network node based on the second interface address information.

Optionally, the first response includes MBS air interface configuration information of the secondary radio access network node, and the transceiver unit 2020 is further configured to send the MBS air interface configuration information to the terminal device.

When the communication apparatus 2000 is configured to implement the function of the SN in the method embodiments shown in FIG. 8 to FIG. 19, the transceiver unit 2020 is configured to receive a first request from a master radio access network node, where the first request requests a secondary radio access network node to provide the multicast broadcast service for the terminal device, and the first request includes the first identifier corresponding to the multicast broadcast service; and the transceiver unit 2020 is further configured to send the first response to the master radio access network node based on the first request, where the first response indicates that the secondary radio access network node accepts to provide the multicast broadcast service for the terminal device.

Optionally, the first request further includes a reference identifier of the multicast broadcast service, an access point AP identifier of the multicast broadcast service, an access and mobility management function identifier, a session management function identifier, a multicast broadcast-session management function identifier, and a multicast broadcast-function identifier; the transceiver unit 2020 is further configured to send a fifth request to the core network based on the first request, where the fifth request includes first interface address information; and the transceiver unit 2020 is further configured to receive the data of the multicast broadcast service from the core network based on the first interface address information.

Optionally, the first request includes an Internet Protocol IP multicast group address of the multicast broadcast service; the processing unit 2010 is configured to join an IP multicast group based on the IP multicast group address; and the transceiver unit 2020 is further configured to receive the data of the multicast broadcast service from the core network.

Optionally, the transceiver unit 2020 is further configured to receive the data of the multicast broadcast service from the core network based on the first interface address information.

Optionally, the transceiver unit 2020 is further configured to send the third request to the master radio access network node, where the third request includes at least one of the following: the first identifier, the second identifier corresponding to the secondary radio access network node, and the first interface address information between the secondary radio access network node and the core network; and the transceiver unit 2020 is further configured to receive the third response from the master radio access network node, where the third response includes the first identifier and optionally includes the second identifier.

Optionally, the transceiver unit 2020 is further configured to receive the data of the multicast broadcast service from the master radio access network node based on the second interface address information.

Optionally, the first response includes the MBS air interface configuration information of the secondary radio access network node.

Optionally, the transceiver unit 2020 is further configured to send the MBS air interface configuration information to the terminal device.

When the communication apparatus 2000 is configured to implement the function of the core network in the method embodiments shown in FIG. 8 to FIG. 19, the transceiver unit 2020 is configured to receive a second request, where the second request includes: a first identifier corresponding to a multicast broadcast service, and at least one of the following: first interface address information of between a secondary radio access network node and the core network, or a second identifier corresponding to the secondary radio access network node; and the transceiver unit 2020 is further configured to send the data of the multicast broadcast service based on the first interface address information or the second identifier.

For more detailed descriptions of the processing unit 2010 and the transceiver unit 2020, refer directly to related descriptions in the method embodiments shown in FIG. 8 to FIG. 19. Details are not described herein again.

As shown in FIG. 21, a communication apparatus 2100 includes a processor 2110 and an interface circuit 2120. The processor 2110 and the interface circuit 2120 are coupled to each other. It may be understood that the interface circuit 2120 may be a transceiver or an input/output interface. Optionally, the communication apparatus 2100 may further include a memory 2130, which is configured to store instructions executed by the processor 2110, or store input data required by the processor 2110 to run the instructions, or store data generated after the processor 2110 runs the instructions.

When the communication apparatus 2100 is configured to implement the methods shown in FIG. 8 to FIG. 19, the processor 2110 is configured to implement a function of the processing unit 2010, and the interface circuit 2120 is configured to implement a function of the transceiver unit 2020.

When the foregoing communication apparatus is a chip used in an MN, the MN chip implements a function of the MN in the foregoing method embodiments. The MN chip receives information from another module (such as a radio frequency module or an antenna) in the MN, where the information is sent by a core network or UE to the MN; or the MN chip sends information to another module (for example, a radio frequency module or an antenna) in the MN, where the information is sent by the MN to a core network or UE.

When the foregoing communication apparatus is a chip used in the SN, the SN chip implements a function of the SN in the foregoing method embodiments. The SN chip receives information from another module (for example, a radio frequency module or an antenna) in the SN, where the information is sent by a core network, UE, or an MN to the SN; or the SN chip sends information to another module (such as a radio frequency module or an antenna) in the SN, where the information is sent by the SN to a core network, UE, or an MN.

When the foregoing communication apparatus is a chip used in the core network, the core network chip implements a function of the core network in the foregoing method embodiments. The core network chip receives information from another module (for example, a radio frequency module or an antenna) in the core network, where the information is sent by an MN/SN to the core network; or the core network chip sends information to another module (such as a radio frequency module or an antenna) in the core network, where the information is sent by the core network to an MN/SN.

It may be understood that a processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), or another programmable logic device, a transistor logic device, a hardware component, or any combination thereof. The general-purpose processor may be a microprocessor, or may be any conventional processor.

The method steps in embodiments of this application may be implemented in a manner of hardware, or may be implemented in a manner of a processor executing software instructions. The software instructions may include a corresponding software module, and the software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or in any other form of storage medium known in the art. An example storage medium is coupled to the processor, so that the processor can read information from the storage medium and can write information to the storage medium. It is clear that the storage medium may alternatively be a component of the processor. The processor and the storage medium may be located in an ASIC. In addition, the ASIC may be located in a base station or a terminal device. It is clear that, the processor and the storage medium may alternatively exist in the base station or the terminal device as discrete components.

All or some of foregoing embodiments may be implemented through software, hardware, firmware, or any combination thereof. When software is used for implementation, all or some of the foregoing embodiments may be implemented in a form of a computer program product. The computer program product includes one or more computer programs or instructions. When the computer programs or instructions are loaded and executed on a computer, all or some of the procedures or functions in embodiments of this application are performed. The computer may be a general-purpose computer, a dedicated computer, a computer network, a base station, user equipment, or another programmable apparatus. The computer programs or instructions may be stored in a computer-readable storage medium, or transmitted from one computer-readable storage medium to another computer-readable storage medium. For example, the computer programs or instructions may be transmitted from one website site, computer, server, or data center to another website site, computer, server, or data center in a wired or wireless manner. The computer-readable storage medium may be any usable medium that can be accessed by the computer, or a data storage device such as a server or a data center that integrates one or more usable media. The usable medium may be a magnetic medium, for example, a floppy disk, a hard disk, or a magnetic tape; may be an optical medium, for example, a digital video disc; or may alternatively be a semiconductor medium, for example, a solid state drive.

In this application, "at least one" means one or more, and "a plurality of" means two or more. "And/or" describes an association relationship between associated objects, and indicates that three relationships may exist, for example, A and/or B may indicate the following cases: A exists alone, both A and B exist, and B exists alone, where A and B may be singular or plural. In the text descriptions of this application, the character "/" generally indicates that the associated objects are in an "or" relationship. In the formula of this application, the character "/" indicates that the associated objects are in a "division" relationship.

It may be understood that various numerical numbers in embodiments of this application are merely for distinguishing for ease of description, and are not intended to limit the scope of embodiments of this application. The sequence numbers of the foregoing processes do not mean the execution sequence, and the execution sequence of the processes should be determined based on the functions and internal logic of the processes.

## Claims

1. A communication method, wherein a terminal device (120) is dual-connected to a master radio access network node (110) and a secondary radio access network node (110) and wherein the method comprises:
the master radio access network node (110) sending a first request to the secondary radio access network node (110) (S801), wherein the first request requests the secondary radio access network node (110) to provide a multicast broadcast service for the terminal device (120), and the first request comprises a first identifier corresponding to the multicast broadcast service;
the master radio access network node (110) receiving a first response from the secondary radio access network node (110), wherein the first response indicates that the secondary radio access network node (110) accepts to provide the multicast broadcast service for the terminal device (120);
the secondary radio access network node (110) establishing or holding an NG-U tunnel between the secondary radio access network node (110) and a core network (200), or establishing an Xn-U tunnel between the secondary radio access network node (110) and the master radio access network node (110), or holding an Xn-U tunnel between the secondary radio access network node (110) and another master radio access network node; and
the secondary radio access network node (110) providing the multicast broadcast service for the terminal device (120).

2. The method according to claim 1, wherein the first response comprises first interface address information allocated by the secondary radio access network node (110) for the multicast broadcast service between the secondary radio access network node (110) and the core network (200), or second interface address information allocated by the secondary radio access network node (110) for the multicast broadcast service between the secondary radio access network node (110) and a master radio access network node (110).

3. The method according to claim 1, wherein the first response further indicates that the multicast broadcast service already exists on the secondary radio access network node (110), or a data transmission channel of the multicast broadcast service is already established on the secondary radio access network node (110).

4. The method according to any one of claims 1 to 3, wherein the first request further comprises at least one piece of the following information: a reference identifier of the multicast broadcast service, a session identifier of the multicast broadcast service, an access point AP identifier of the multicast broadcast service, an access and mobility management function identifier, a session management function identifier, a multicast broadcast-session management function identifier, and a multicast broadcast-function identifier.

5. The method according to claim 1, 3, or 4, wherein the first request further comprises an Internet Protocol IP multicast group address of the multicast broadcast service, and the IP multicast group address is used to receive data of the multicast broadcast service.

6. The method according to claim 2, wherein the method further comprises:
the master radio access network node (110) sending a second request to the core network (200) (S903), wherein the second request comprises the first identifier and at least one of the following: the first interface address information or a second identifier corresponding to the secondary radio access network node (110),
the core network (200) sending the multicast broadcast service data to the secondary radio access network node (110) based on the first interface address information (S905).

7. A communication method, wherein a terminal device (120) is dual-connected to a master radio access network node (110) and a secondary radio access network node (110) and wherein the method comprises:
the secondary radio access network node (110) receiving a first request from the master radio access network node (110), wherein the first request requests the secondary radio access network node (110) to provide a multicast broadcast service for the terminal device (120), and the first request comprises a first identifier corresponding to the multicast broadcast service;
the secondary radio access network node (110) sending a first response to the master radio access network node (110) (S802) based on the first request, wherein the first response indicates that the secondary radio access network node (110) accepts to provide the multicast broadcast service for the terminal device (120);
the secondary radio access network node (110) establishing or holding an NG-U tunnel between the secondary radio access network node (110) and the core network (200), or establishing an Xn-U tunnel between the secondary radio access network node (110) and the master radio access network node (110), or holding an Xn-U tunnel between the secondary radio access network node (110) and another master radio access network node; and
the secondary radio access network node (110) providing the multicast broadcast service for the terminal device (120).

8. The method according to claim 7, wherein the first response comprises first interface address information allocated by the secondary radio access network node (110) for the multicast broadcast service between the secondary radio access network node (110) and the core network (200), or second interface address information allocated by the secondary radio access network node (110) for the multicast broadcast service between the secondary radio access network node (110) and the master radio access network node (110).

9. The method according to claim 7, wherein the first response further indicates that the multicast broadcast service already exists on the secondary radio access network node (110), or a data transmission channel of the multicast broadcast service is already established on the secondary radio access network node (110).

10. The method according to claim 8, wherein the first request further comprises a reference identifier of the multicast broadcast service, an access point AP identifier of the multicast broadcast service, an access and mobility management function identifier, a session management function identifier, a multicast broadcast-session management function identifier, and a multicast broadcast-function identifier; and
the method further comprises:
sending a fifth request to the core network (200) based on the first request, wherein the fifth request comprises the first interface address information; and
receiving data of the multicast broadcast service from the core network (200) based on the first interface address information.

11. The method according to claim 7, wherein the first request comprises an Internet Protocol IP multicast group address of the multicast broadcast service; and
the method further comprises:
based on the IP multicast group address,
receiving data of the multicast broadcast service from the core network (200).

12. The method according to claim 8, wherein the method comprises:
receiving data of the multicast broadcast service from the core network (200) based on the first interface address information.

13. A communication system (2000, 2100), comprising:
means for performing the method according to any one of claims 1 to 6.

14. A communication apparatus (2000, 2100), comprising:
means for performing the method according to any one of claims 7 to 12.

15. A computer-readable storage medium comprising instructions which, when executed by a system or a computer, cause the system to carry out the method according to any one of claims 1 to 6, or cause the computer to carry out the method according to any one of claims 7 to 12.

## Patentansprüche

1. Kommunikationsverfahren, wobei ein Endgerät (120) dual mit einem Master-Funkzugangsnetzwerkknoten (110) und einem sekundären Funkzugangsnetzwerkknoten (110) verbunden ist und wobei das Verfahren Folgendes umfasst:
den Master-Funkzugangsnetzwerkknoten (110), der eine erste Anforderung an den sekundären Funkzugangsnetzwerkknoten (110) (S801) sendet, wobei die erste Anforderung den sekundären Funkzugangsnetzwerkknoten (110) anfordert, einen Multicast-Broadcast-Dienst für das Endgerät (120) bereitzustellen, und die erste Anforderung einen ersten Identifikator umfasst, der dem Multicast-Broadcast-Dienst entspricht;
den Master-Funkzugangsnetzwerkknoten (110), der eine erste Antwort von dem sekundären Funkzugangsnetzwerkknoten (110) empfängt, wobei die erste Antwort anzeigt, dass der sekundäre Funkzugangsnetzwerkknoten (110) akzeptiert, den Multicast-Broadcast-Dienst für das Endgerät (120) bereitzustellen;
den sekundären Funkzugangsnetzwerkknoten (110), der einen NG-U-Tunnel zwischen dem sekundären Funkzugangsnetzwerkknoten (110) und einem Kernnetzwerk (200) einrichtet oder aufrechterhält oder einen Xn-U-Tunnel zwischen dem sekundären Funkzugangsnetzwerkknoten (110) und dem Master-Funkzugangsnetzwerkknoten (110) einrichtet oder einen Xn-U-Tunnel zwischen dem sekundären Funkzugangsnetzwerkknoten (110) und einem anderen Master-Funkzugangsnetzwerkknoten aufrechterhält; und
den sekundären Funkzugangsnetzwerkknoten (110), der den Multicast-Broadcast-Dienst für das Endgerät (120) bereitstellt.

2. Verfahren nach Anspruch 1, wobei die erste Antwort erste Schnittstellenadressinformationen, die von dem sekundären Funkzugangsnetzwerkknoten (110) für den Multicast-Broadcast-Dienst zwischen dem sekundären Funkzugangsnetzwerkknoten (110) und dem Kernnetzwerk (200) zugewiesen werden, oder zweite Schnittstellenadressinformationen, die von dem sekundären Funkzugangsnetzwerkknoten (110) für den Multicast-Broadcast-Dienst zwischen dem sekundären Funkzugangsnetzwerkknoten (110) und einem Master-Funkzugangsnetzwerkknoten (110) zugewiesen werden, umfasst.

3. Verfahren nach Anspruch 1, wobei die erste Antwort ferner anzeigt, dass der Multicast-Broadcast-Dienst bereits auf dem sekundären Funkzugangsnetzwerkknoten (110) existiert oder ein Datenübertragungskanal des Multicast-Broadcast-Dienstes bereits auf dem sekundären Funkzugangsnetzwerkknoten (110) eingerichtet ist.

4. Verfahren nach einem der Ansprüche 1 bis 3, wobei die erste Anforderung ferner mindestens eine der folgenden Informationen umfasst: einen Referenzidentifikator des Multicast-Broadcast-Dienstes, einen Sitzungsidentifikator des Multicast-Broadcast-Dienstes, einen Zugangspunkt-AP-Identifikator des Multicast-Broadcast-Dienstes, einen Zugangs- und Mobilitätsverwaltungsfunktionsidentifikator, einen Sitzungsverwaltungsfunktionsidentifikator, einen Multicast-Broadcast-Sitzungsverwaltungsfunktionsidentifikator und einen Multicast-Broadcast-Funktionsidentifikator.

5. Verfahren nach Anspruch 1, 3 oder 4, wobei die erste Anforderung ferner eine Internetprotokoll-IP-Multicast-Gruppenadresse des Multicast-Broadcast-Dienstes umfasst und die IP-Multicast-Gruppenadresse verwendet wird, um Daten des Multicast-Broadcast-Dienstes zu empfangen.

6. Verfahren nach Anspruch 2, wobei das Verfahren ferner Folgendes umfasst:
den Master-Funkzugangsnetzwerkknoten (110), der eine zweite Anforderung an das Kernnetzwerk (200) (S903) sendet, wobei die zweite Anforderung den ersten Identifikator und mindestens eines der Folgenden umfasst: die ersten Schnittstellenadressinformationen oder einen zweiten Identifikator, der dem sekundären Funkzugangsnetzwerkknoten (110) entspricht,
das Kernnetzwerk (200), das die Multicast-Broadcast-Dienstdaten an den sekundären Funkzugangsnetzwerkknoten (110) basierend auf den ersten Schnittstellenadressinformationen (S905) sendet.

7. Kommunikationsverfahren, wobei ein Endgerät (120) dual mit einem Master-Funkzugangsnetzwerkknoten (110) und einem sekundären Funkzugangsnetzwerkknoten (110) verbunden ist und wobei das Verfahren Folgendes umfasst:
den sekundären Funkzugangsnetzwerkknoten (110), der eine erste Anforderung von dem Master-Funkzugangsnetzwerkknoten (110) empfängt, wobei die erste Anforderung den sekundären Funkzugangsnetzwerkknoten (110) anfordert, einen Multicast-Broadcast-Dienst für das Endgerät (120) bereitzustellen, und die erste Anforderung einen ersten Identifikator umfasst, der dem Multicast-Broadcast-Dienst entspricht;
den sekundären Funkzugangsnetzwerkknoten (110), der basierend auf der ersten Anforderung eine erste Antwort an den Master-Funkzugangsnetzwerkknoten (110) (S802) sendet, wobei die erste Antwort anzeigt, dass der sekundäre Funkzugangsnetzwerkknoten (110) akzeptiert, den Multicast-Broadcast-Dienst für das Endgerät (120) bereitzustellen;
den sekundären Funkzugangsnetzwerkknoten (110), der einen NG-U-Tunnel zwischen dem sekundären Funkzugangsnetzwerkknoten (110) und dem Kernnetzwerk (200) einrichtet oder aufrechterhält oder einen Xn-U-Tunnel zwischen dem sekundären Funkzugangsnetzwerkknoten (110) und dem Master-Funkzugangsnetzwerkknoten (110) einrichtet oder einen Xn-U-Tunnel zwischen dem sekundären Funkzugangsnetzwerkknoten (110) und einem anderen Master-Funkzugangsnetzwerkknoten aufrechterhält; und
den sekundären Funkzugangsnetzwerkknoten (110), der den Multicast-Broadcast-Dienst für das Endgerät (120) bereitstellt.

8. Verfahren nach Anspruch 7, wobei die erste Antwort erste Schnittstellenadressinformationen, die von dem sekundären Funkzugangsnetzwerkknoten (110) für den Multicast-Broadcast-Dienst zwischen dem sekundären Funkzugangsnetzwerkknoten (110) und dem Kernnetzwerk (200) zugewiesen werden, oder zweite Schnittstellenadressinformationen, die von dem sekundären Funkzugangsnetzwerkknoten (110) für den Multicast-Broadcast-Dienst zwischen dem sekundären Funkzugangsnetzwerkknoten (110) und dem Master-Funkzugangsnetzwerkknoten (110) zugewiesen werden, umfasst.

9. Verfahren nach Anspruch 7, wobei die erste Antwort ferner anzeigt, dass der Multicast-Broadcast-Dienst bereits auf dem sekundären Funkzugangsnetzwerkknoten (110) existiert oder ein Datenübertragungskanal des Multicast-Broadcast-Dienstes bereits auf dem sekundären Funkzugangsnetzwerkknoten (110) eingerichtet ist.

10. Verfahren nach Anspruch 8, wobei die erste Anforderung ferner einen Referenzidentifikator des Multicast-Broadcast-Dienstes, einen Zugangspunkt-AP-Identifikator des Multicast-Broadcast-Dienstes, einen Zugangs- und Mobilitätsverwaltungsfunktionsidentifikator, einen Sitzungsverwaltungsfunktionsidentifikator, einen Multicast-Broadcast-Sitzungsverwaltungsfunktionsidentifikator und einen Multicast-Broadcast-Funktionsidentifikator umfasst; und
das Verfahren ferner Folgendes umfasst:
Senden einer fünften Anforderung an das Kernnetzwerk (200) basierend auf der ersten Anforderung, wobei die fünfte Anforderung die ersten Schnittstellenadressinformationen umfasst; und
Empfangen von Daten des Multicast-Broadcast-Dienstes von dem Kernnetzwerk (200) basierend auf den ersten Schnittstellenadressinformationen.

11. Verfahren nach Anspruch 7, wobei die erste Anforderung eine Internetprotokoll-IP-Multicast-Gruppenadresse des Multicast-Broadcast-Dienstes umfasst; und
das Verfahren ferner Folgendes umfasst:
auf der IP-Multicast-Gruppenadresse basierendes Empfangen von Daten des Multicast-Broadcast-Dienstes von dem Kernnetzwerk (200).

12. Verfahren nach Anspruch 8, wobei das Verfahren Folgendes umfasst:
Empfangen von Daten des Multicast-Broadcast-Dienstes von dem Kernnetzwerk (200) basierend auf den ersten Schnittstellenadressinformationen.

13. Kommunikationssystem (2000, 2100), umfassend:
ein Mittel zum Durchführen des Verfahrens nach einem der Ansprüche 1 bis 6.

14. Kommunikationsvorrichtung (2000, 2100), umfassend:
ein Mittel zum Durchführen des Verfahrens nach einem der Ansprüche 7 bis 12.

15. Computerlesbares Speichermedium, umfassend Anweisungen, die, wenn sie durch ein System oder einen Computer ausgeführt werden, das System dazu veranlassen, das Verfahren nach einem der Ansprüche 1 bis 6 vorzunehmen, oder den Computer dazu veranlassen, das Verfahren nach einem der Ansprüche 7 bis 12 vorzunehmen.

## Revendications

1. Procédé de communication, dans lequel un dispositif terminal (120) est connecté en double à un nœud de réseau d'accès radio maître (110) et à un nœud de réseau d'accès radio secondaire (110), et dans lequel le procédé comprend :
le nœud de réseau d'accès radio maître (110) envoyant une première demande au nœud de réseau d'accès radio secondaire (110) (S801), dans lequel la première demande demande au nœud de réseau d'accès radio secondaire (110) de fournir un service de diffusion multidiffusion pour le dispositif terminal (120), et la première demande comprend un premier identifiant correspondant au service de diffusion multidiffusion ;
le nœud de réseau d'accès radio maître (110) recevant une première réponse du nœud de réseau d'accès radio secondaire (110), dans lequel la première réponse indique que le nœud de réseau d'accès radio secondaire (110) accepte de fournir un service de diffusion multidiffusion pour le dispositif terminal (120) ;
le nœud de réseau d'accès radio secondaire (110) établissant ou maintenant un tunnel NG-U entre le nœud de réseau d'accès radio secondaire (110) et un réseau central (200), ou établissant un tunnel Xn-U entre le nœud de réseau d'accès radio secondaire (110) et le nœud de réseau d'accès radio maître (110), ou maintenant un tunnel Xn-U entre le nœud de réseau d'accès radio secondaire (110) et un autre nœud de réseau d'accès radio maître ; et
le nœud de réseau d'accès radio secondaire (110) fournissant le service de diffusion multidiffusion pour le dispositif terminal (120).

2. Procédé selon la revendication 1, dans lequel la première réponse comprend des informations d'adresse de première interface allouées par le nœud de réseau d'accès radio secondaire (110) pour le service de diffusion multidiffusion entre le nœud de réseau d'accès radio secondaire (110) et le réseau central (200), ou des informations d'adresse de seconde interface allouées par le nœud de réseau d'accès radio secondaire (110) pour le service de diffusion multidiffusion entre le nœud de réseau d'accès radio secondaire (110) et un nœud de réseau d'accès radio maître (110).

3. Procédé selon la revendication 1, dans lequel la première réponse indique en outre que le service de diffusion multidiffusion existe déjà sur le nœud de réseau d'accès radio secondaire (110), ou qu'un canal de transmission de données du service de diffusion multidiffusion est déjà établi sur le nœud de réseau d'accès radio secondaire (110).

4. Procédé selon l'une quelconque des revendications 1 à 3, dans lequel la première demande comprend en outre au moins une des informations suivantes : un identifiant de référence du service de diffusion multidiffusion, un identifiant de session du service de diffusion multidiffusion, un identifiant de point d'accès AP du service de diffusion multidiffusion, un identifiant de fonction de gestion d'accès et de mobilité, un identifiant de fonction de gestion de session, un identifiant de fonction de gestion de session de diffusion multidiffusion et un identifiant de fonction de diffusion multidiffusion.

5. Procédé selon la revendication 1, 3 ou 4, dans lequel la première demande comprend en outre une adresse de groupe de multidiffusion de Protocole Internet IP du service de diffusion multidiffusion, et l'adresse de groupe de multidiffusion IP est utilisée pour recevoir des données du service de diffusion multidiffusion.

6. Procédé selon la revendication 2, dans lequel le procédé comprend en outre :
le nœud de réseau d'accès radio maître (110) envoyant une seconde demande au réseau central (200) (S903), dans lequel la seconde demande comprend le premier identifiant et au moins l'un des éléments suivants : les informations d'adresse de première interface ou un second identifiant correspondant au nœud de réseau d'accès radio secondaire (110),
le réseau central (200) envoyant les données de service de diffusion multidiffusion au nœud de réseau d'accès radio secondaire (110) sur la base des informations d'adresse de première interface (S905).

7. Procédé de communication, dans lequel un dispositif terminal (120) est connecté en double à un nœud de réseau d'accès radio maître (110) et à un nœud de réseau d'accès radio secondaire (110), et dans lequel le procédé comprend :
le nœud de réseau d'accès radio secondaire (110) recevant une première demande du nœud de réseau d'accès radio maître (110), dans lequel la première demande demande au nœud de réseau d'accès radio secondaire (110) de fournir un service de diffusion multidiffusion pour le dispositif terminal (120), et la première demande comprend un premier identifiant correspondant au service de diffusion multidiffusion ;
le nœud de réseau d'accès radio secondaire (110) envoyant une première réponse au nœud de réseau d'accès radio maître (110) (S802) sur la base de la première demande, dans lequel la première réponse indique que le nœud de réseau d'accès radio secondaire (110) accepte de fournir un service de diffusion multidiffusion pour le dispositif terminal (120) ;
le nœud de réseau d'accès radio secondaire (110) établissant ou maintenant un tunnel NG-U entre le nœud de réseau d'accès radio secondaire (110) et le réseau central (200), ou établissant un tunnel Xn-U entre le nœud de réseau d'accès radio secondaire (110) et le nœud de réseau d'accès radio maître (110), ou maintenant un tunnel Xn-U entre le nœud de réseau d'accès radio secondaire (110) et un autre nœud de réseau d'accès radio maître ; et
le nœud de réseau d'accès radio secondaire (110) fournissant le service de diffusion multidiffusion pour le dispositif terminal (120).

8. Procédé selon la revendication 7, dans lequel la première réponse comprend des informations d'adresse de première interface allouées par le nœud de réseau d'accès radio secondaire (110) pour le service de diffusion multidiffusion entre le nœud de réseau d'accès radio secondaire (110) et le réseau central (200), ou des informations d'adresse de seconde interface allouées par le nœud de réseau d'accès radio secondaire (110) pour le service de diffusion multidiffusion entre le nœud de réseau d'accès radio secondaire (110) et le nœud de réseau d'accès radio maître (110).

9. Procédé selon la revendication 7, dans lequel la première réponse indique en outre que le service de diffusion multidiffusion existe déjà sur le nœud de réseau d'accès radio secondaire (110), ou qu'un canal de transmission de données du service de diffusion multidiffusion est déjà établi sur le nœud de réseau d'accès radio secondaire (110).

10. Procédé selon la revendication 8, dans lequel la première demande comprend en outre un identifiant de référence du service de diffusion multidiffusion, un identifiant de point d'accès AP du service de diffusion multidiffusion, un identifiant de fonction de gestion d'accès et de mobilité, un identifiant de fonction de gestion de session, un identifiant de fonction de gestion de session de diffusion multidiffusion et un identifiant de fonction de diffusion multidiffusion ; et
le procédé comprend en outre :
l'envoi d'une cinquième demande au réseau central (200) sur la base de la première demande, dans lequel la cinquième demande comprend les informations d'adresse de première interface ; et
la réception de données du service de diffusion multidiffusion depuis le réseau central (200) sur la base des informations d'adresse de première interface.

11. Procédé selon la revendication 7, dans lequel la première demande comprend une adresse de groupe de multidiffusion de protocole Internet IP du service de diffusion multidiffusion ; et
le procédé comprend en outre :
sur la base de l'adresse de groupe de multidiffusion IP,
la réception de données du service de diffusion multidiffusion depuis le réseau central (200).

12. Procédé selon la revendication 8, dans lequel le procédé comprend :
la réception de données du service de diffusion multidiffusion depuis le réseau central (200) sur la base des informations d'adresse de première interface.

13. Système de communication (2000, 2100), comprenant :
des moyens pour réaliser le procédé selon l'une quelconque des revendications 1 à 6.

14. Appareil de communication (2000, 2100), comprenant :
des moyens pour réaliser le procédé selon l'une quelconque des revendications 7 à 12.

15. Support de stockage lisible par ordinateur comprenant des instructions qui, lorsqu'elles sont exécutées par un système ou un ordinateur, amènent le système à mettre en œuvre le procédé selon l'une quelconque des revendications 1 à 6, ou amènent l'ordinateur à mettre en œuvre le procédé selon l'une quelconque des revendications 7 à 12.
